(19) Europäisches Patentamt / European Patent Office / Office européen des brevets

(11) EP 2 804 430 B1

(12) **EUROPEAN PATENT SPECIFICATION**

(45) Date of publication and mention
of the grant of the patent:
**19.04.2017 Bulletin 2017/16**

(21) Application number: **12864798.9**

(22) Date of filing: **28.12.2012**

(51) Int Cl.:
*H04W 52/14* (2009.01)     *H04W 52/34* (2009.01)
*H04W 52/32* (2009.01)     *H04W 72/02* (2009.01)

(86) International application number:
**PCT/CN2012/087885**

(87) International publication number:
**WO 2013/104261 (18.07.2013 Gazette 2013/29)**

(54) **UPLINK TRANSMISSION POWER DETERMINATION METHOD AND USER EQUIPMENT**

VERFAHREN UND BENUTZERVORRICHTUNG ZUR BESTIMMUNG EINER
UPLINK-SENDELEISTUNG

PROCÉDÉ ET ÉQUIPEMENT D'UTILISATEUR POUR LA DÉTERMINATION DE PUISSANCE DE
TRANSMISSION DE LIAISON MONTANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.01.2012 CN 201210004601**

(43) Date of publication of application:
**19.11.2014 Bulletin 2014/47**

(73) Proprietor: **Huawei Technologies Co., Ltd.
Longgang District
Shenzhen, Guangdong 518129 (CN)**

(72) Inventor: **LI, Yuanjie
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2011/120716     CN-A- 102 308 640
US-A1- 2011 081 936     US-A1- 2011 081 936**

• **'3rd Generation Partnership Project; Technical
Specification Group Radio Access Network;
Evolved Universal Terrestrial Radio Access
(E-UTRA); Physical layer procedures (Release 8)'
3GPP TS 36.213 V8.6.0, [Online] March 2009,
XP002558263 Retrieved from the Internet:
<URL:http://3GPP.org/ftp/specs/archive/36_s
eries/36.213> [retrieved on 2013-03-07]**

**Description**

**TECHNICAL FIELD**

The present invention relates to communication technologies and, in particular, to a method for determining an uplink transmission power and a user equipment.

**BACKGROUND**

In a wireless communication system with the carrier aggregation (Carrier Aggregation, CA for short) feature, a user equipment may communicate with a base station through multiple cells. During uplink transmission, to ensure that uplink signals of all user equipments belonging to a base station arrive at the base station synchronously, the base station may adjust the time of transmitting uplink signals by the user equipment, that is, uplink transmit time, according to the offset condition of the arriving time of uplink signals of user equipments.

However, because uplink signals of user equipments may be transmit to the base station through different cells along different paths, for example, uplink signals transmitted by the user equipment to the base station may need to pass through a relay node when the uplink signals are transmitted through some cells, but may not need to pass through a relay node when the uplink signals are transmitted through some another cells, therefore, the uplink transmit time of user equipments may be different. As a result, the uplink power control performed by the UE based on the prior art is not accurate, thereby degrading the uplink data transmitting quality.

US 2011/0081936 A1 discloses a method of transmit power control in a wireless transmit/receive unit (WTRU) and a WTRU, where the WTRU may set a transmit power for each of a plurality of channels mapped to multiple component carriers (CC) and the channels may include at least one physical uplink shared channel (PUSCH) and may also include at least one physical uplink control channel (PUCCH).

**SUMMARY**

The present invention provides a method for determining an uplink transmission power and a user equipment, so as to improve the uplink data transmitting quality.

In one aspect, a method for determining an uplink transmission power is provided and includes:

determining, by a user equipment, an overlap between an uplink channel of a cell in a current subframe and an uplink channel of another cell in an adjacent subframe, the cell being in carrier aggregation with the another cell; and
determining, by the user equipment according to the determined overlap, transmission power of a physical uplink shared channel (PUSCH) of the cell in the current subframe and the another cell in the current subframe.

In another aspect, a user equipment is provided and includes:

an overlap determining unit, configured to determine an overlap between an uplink channel of a cell in a current subframe and an uplink channel of another cell in an adjacent subframe, the cell being in carrier aggregation with the another cell; and
a power determining unit, configured to determine, according to the overlap determined by the overlap determining unit, transmission power of a physical uplink shared channel (PUSCH) of the cell in the current subframe and the another cell in the current subframe.

It may be known from the above technical solution that, in embodiments of the present invention, the user equipment determines an overlap between an uplink channel of a cell in a current subframe and an uplink channel of the another cell which processes carrier aggregation with the cell in an adjacent subframe, so that the user equipment can determine transmission power of a PUSCH of the cell in the current subframe and the another cell which processes carrier aggregation with the cell in the current subframe. As a result, the problem that the uplink power control performed by the user equipment according to the prior art is not accurate is solved and thus the uplink data transmitting quality is improved.

**BRIEF DESCRIPTION OF DRAWINGS**

To illustrate the technical solutions in embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a schematic flowchart of a method for determining an uplink transmission power according to an embodiment of the present invention; and
FIG. 2 is a schematic structural diagram of a user equipment according to another embodiment of the present invention.

**DESCRIPTION OF EMBODIMENTS**

To make the objectives, technical solutions, and advantages of embodiments of the present invention more comprehensible, the following clearly and completely describes the technical solutions in embodiments of the present invention with reference to the accompanying drawings in embodiments of the present invention. Apparently, the described embodiments are merely a part rather than all of the embodiments of the present invention. All other embodiments obtained by a person of ordinary skill in the art based on embodiments of the present invention without creative efforts shall fall within the protection scope of the present invention.
The technical solution of the present invention can be applied to various wireless communication systems such as a Global System for Mobile Communications (Global System for Mobile Communications, GSM for short), a General Packet Radio Service (General Packet Radio Service, GPRS for short) network, a Code Division Multiple Access (Code Division Multiple Access, CDMA for short) network, a Wideband Code Division Multiple Access (Wideband Code Division Multiple Access, WCDMA for short) network, a Time Division-Synchronous Code Division Multiple Access (Time Division-Synchronous Code Division Multiple Access, TD-SCDMA for short) network, a Long Term Evolution (Long Term Evolution, LTE for short) or a Long Term Evolution Advanced (LTE Advanced, LTE-A for short) network and subsequent evolution networks. The terms "network" and "system" are interchangeable.
The cells involved in embodiments of the present invention may also be understood as carriers, where the concept of the cells and the carriers are the same.
The subframe parameters t, t1, or t2 involved in embodiments of the present invention may be i-1 (representing the subframe previous to the current subframe) or i+1 (representing the subframe following the current subframe), which is not limited herein.
The power involved in embodiments of the present invention is linear power.
The channel overlap involved in embodiments of the present invention can be understood as a subframe overlap (that is, the current subframe and an adjacent subframe are partially overlapped in time) between uplink signals transmitted by the user equipment through different cells.

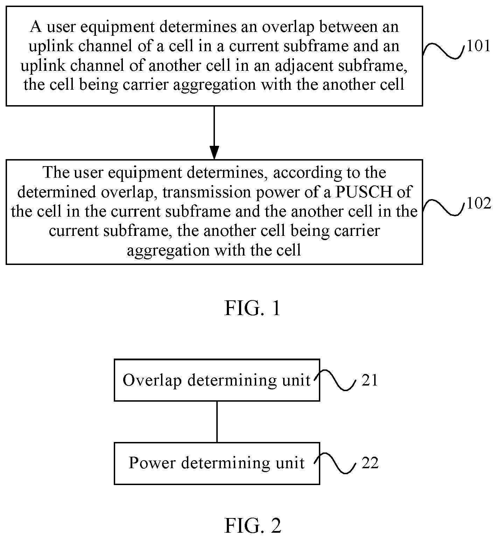

FIG. 1 is a schematic flowchart of a method for determining an uplink transmission power according to an embodiment of the present invention. As shown in FIG. 1, the method for determining an uplink transmission power in this embodiment may include the following:

101: A user equipment determines an overlap between an uplink channel of a cell in a current subframe and an uplink channel of another cell in an adjacent subframe, the cell being carrier aggregation with the another cell.

In this embodiment, the user equipment may determine the overlap between the uplink channels in one of the following ways:

For example, the user equipment determines the overlap according to the uplink transmit time of the cell and that of the other cells which processes carrier aggregation with the cell. If the uplink transmit time of different cells is different, the uplink channels will overlap with each other.

In another example, the user equipment determines whether the cells which processes carrier aggregation belong to different TA (time advance, time advance) groups. If the cells belong to different TA groups, the uplink channels of different TA groups will overlap with each other.
In still another example, the user equipment determines whether the TA value adjustment of the cells which processes carrier aggregation in the uplink are the same. If the TA value adjustments are different, the uplink channels of the cells with different TA value adjustments will overlap with each other.
Persons skilled in the art may understand that the user equipment can also determine the overlap between uplink channels in other ways, which are not limited in the present invention.
102: The user equipment determines, according to the determined overlap, transmission power of a physical uplink shared channel (PUSCH) of the cell in the current subframe and the another cell in the current subframe, the another cell being carrier aggregation with the cell. According to an optional implementation mode provided in embodiments of the present invention, in 101, the overlap determined by the user equipment may include: the PUSCH of the cell in the current subframe is overlapped with the PUCCH of the another cell in the adjacent subframe, the another cell being carrier aggregation with the cell.

For example, in 102, the user equipment determines, according to formula (1), first transmission power of the PUSCH of the cell in the current subframe and the another cell which processes carrier aggregation with the cell in the current subframe, where:

$$\sum_c w(i) \cdot P_{PUSCH,c}(i) \leq \left( P_{CMAX}(i) - \max \left( P_{PUCCH}(i), \ P_{PUCCH}(t) \right) \right) \tag{1}$$

where $w(i)$ represetns a weighting factor, whose value range is [0, 1]; c represents a cell; $\sum_c w(i) \cdot P_{PUSCH,c}(i)$ represents the first transmission power of the PUSCH of the cell in the current subframe and the another cell which processes carrier aggregation with the cell in the current subframe; $P_{PUCCH}(i)$ represents first transmission power, which is obtained by the user equipment by performing uplink power control, of a PUCCH of the another cell which processes carrier aggregation with the cell in the current subframe; $P_{PUCCH}(t)$ represents first transmission power, which is obtained by the user equipment by performing uplink power control, of the PUCCH of the another cell which processes carrier aggregation with the cell in the adjacent subframe; and $P_{CMAX}(i)$ represents maximum allowable power of the current subframe.

For example, the PUSCH of the cell in the current subframe and the another cell which processes carrier aggregation with the cell in the current subframe includes a PUSCH bearing uplink signaling.

In 102, the user equipment may specifically determine, according to formulas (2) and (3), second transmission power of the PUSCH of the cell in the current subframe and the another cell which processes carrier aggregation with the cell in the current subframe, where:

$$\sum_{c \neq j} w(i) \cdot P_{PUSCH,c}(i) \leq \left( P_{CMAX}(i) - P_{PUSCH,j}(i) - P_{PUCCH}(t) \right) \tag{2}$$

$$P_{PUSCH,j}(i) = \min \left\{ P_{PUSCH,j\_o}(i), \left( P_{CMAX}(i) - P_{PUCCH}(t) \right) \right\} \tag{3}$$

where $w(i)$ represents a weighting factor, whose value range is [0, 1]; c represents a cell; $\sum_{c \neq j} w(i) \cdot P_{PUSCH,c}(i)$ represents second transmission power of a PUSCH bearing no uplink control signaling of the cell in the current subframe, and the another cell which processes carrier aggregation with the cell in the current subframe; $P_{PUCCH}(t)$ represents second transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; and $P_{PUSCH,j\_o}(i)$ represents first transmission power, which is obtained by the user equipment by performing uplink power control, of a PUSCH bearing uplink signaling included in the current subframe.

In 102, the user equipment may also specifically determine, according to formula (4), third transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) \leq \left( P_{CMAX}(i) - P_{PUCCH}(t) \right) \tag{4}$$

where $w(i)$ and $u(i)$ represent weighting factors, whose value range is [0, 1]; c represents a cell; $\sum_{c \neq j} w(i) \cdot P_{PUSCH,c}(i)$ represents third transmission power of a PUSCH bearing no uplink control signaling of the cell in the current subframe and the another cell which processes carrier aggregation with the cell in the current subframe; $P_{PUCCH}(t)$ represents third transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; and $P_{PUSCH,j}(i)$ represents first transmission power, which is obtained by the user equipment by performing uplink power control, of a PUSCH bearing uplink control signaling in the current subframe.

For example, the PUSCH of the cell in the current subframe and the another cell which processes carrier aggregation with the cell in the current subframe includes a PUSCH that bears uplink control signaling, and a PUCCH is further included in the cell in the current subframe and the another cell which processes carrier aggregation with the cell in the current subframe.

In 102, the user equipment may also specifically determine, according to formulas (5) and (6), fourth transmission power of the PUSCH of the cell in the current subframe and the another cell which processes carrier aggregation with the cell in the current subframe, where:

$$\sum_{c \neq j} w(i) \cdot P_{PUSCH,c}(i) \leq \left( P_{CMAX}(i) - P_{PUSCH,j}(i) - \max\left( P_{PUCCH}(i),\ P_{PUCCH}(t) \right) \right) \tag{5}$$

$$P_{PUSCH,j}(i) = \min\left\{ P_{PUSCH,j\_o}(i), \left( P_{CMAX}(i) - \max\left( P_{PUCCH}(i),\ P_{PUCCH}(t) \right) \right) \right\} \tag{6}$$

where $w(i)$ represents a weighting factor, whose value range is [0, 1]; c represents a cell; $\sum_{c \neq j} w(i) \cdot P_{PUSCH,c}(i)$ represents fourth transmission power of a PUSCH bearing no uplink control signaling of the cell in the current subframe and the another cell which processes carrier aggregation with the cell in the current subframe; $P_{PUCCH}(i)$ represents second transmission power, which is obtained by the user equipment by performing uplink power control, of the PUCCH of the another cell which processes carrier aggregation with the cell in the current subframe; $P_{PUCCH}(t)$ represents fourth transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; and $P_{PUSCH,j\_o}(i)$ represents second transmission power, which is obtained by the user equipment by performing uplink power control, of the PUSCH bearing uplink signaling included in the current frame.

In 102, the user equipment may also specifically determine, according to formula (7), fifth transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) \leq \left( P_{CMAX}(i) - \max\left( P_{PUCCH}(i),\ P_{PUCCH}(t) \right) \right) \tag{7}$$

where $w(i)$ and $u(i)$ represent weighting factors, whose value range is [0, 1]; c represents a cell; $\sum_{c \neq j} w(i) \cdot P_{PUSCH,c}(i)$ represents fifth transmission power of a PUSCH bearing no uplink control signaling of the cell in the current subframe and the another cell which processes carrier aggregation with the cell in the current subframe; $P_{PUCCH}(i)$ represents third transmission power, which is obtained by the user equipment by performing uplink power control, of the PUCCH of the another cell which processes carrier aggregation with the cell in the current subframe; $P_{PUCCH}(t)$ represents fifth transmission power, which is obtained by the user equipment by performing uplink power control, of the PUCCH of the another cell which processes carrier aggregation with the cell in the adjacent sub frame; $P_{CMAX}(i)$ represents maximum allowable power of the current subframe; and $P_{PUSCH}(i)$ represents second transmission power, which is obtained by the user equipment by performing uplink power control, of a PUSCH bearing uplink control signaling in the current subframe.

According to another optional implementation mode provided in embodiments of the present invention, in 101, the overlap determined by the user equipment may further include: the PUSCH of the cell in the current subframe, or a PUCCH of the cell in the current subframe, or at least one of the PUSCH and the PUCCH of the cell in the current subframe is overlapped with a PUSCH bearing uplink signaling in the another cell in the adjacent subframe, the another cell being carrier aggregation with the cell.

For example, in 102, the user equipment determines, according to formula (8), sixth transmission power of the PUSCH of the cell in the current subframe and the another cell which processes carrier aggregation with the cell in the current subframe, where:

$$\sum_c w(i) \cdot P_{PUSCH,c}(i) \le \left( P_{CMAX}(i) - P_{PUSCH,k}(t) - P_{PUCCH}(i) \right) \tag{8}$$

where $w(i)$ represents a weighting factor, whose value range is [0, 1]; c represents a cell; $\sum_c w(i) \cdot P_{PUSCH,c}(i)$ represents the sixth transmission power of the PUSCH of the cell in the current subframe and the another cell which processes carrier aggregation with the cell in the current subframe; $P_{PUCCH}(i)$ represents fourth transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; and $P_{PUSCH,k}(t)$ represents first transmission power, which is obtained by the user equipment by performing uplink power control, of the PUSCH bearing uplink control signaling of the cell in the adjacent subframe and the another cell which processes carrier aggregation with the cell in the adjacent subframe.

In 102, the user equipment may also specifically determine, according to formula (9), seventh transmission power of the PUSCH of the cell in the current subframe and the another cell which processes carrier aggregation with the cell in the current subframe, where:

$$\sum_c w(i) \cdot P_{PUSCH,c}(i) + u(i) \cdot P_{PUSCH,k}(t) + v(i) \cdot P_{PUCCH}(i) \le P_{CMAX}(i) \tag{9}$$

where $w(i)$, $u(i)$, and $v(i)$ represent weighting factors, whose value range is [0, 1]; c represents a cell; $\sum_c w(i) \cdot P_{PUSCH,c}(i)$ represents the seventh transmission power of the PUSCH of the cell in the current subframe and the another cell which processes carrier aggregation with the cell in the current subframe; $P_{PUCCH}(i)$ represents fifth transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; and $P_{PUSCH,k}(t)$ represents second transmission power, which is obtained by the user equipment by performing uplink power control, of a PUSCH bearing uplink signaling of the cell in the adjacent subframe and the another cell which processes carrier aggregation with the cell in the adjacent subframe.

For example, the PUSCH of the cell in the current subframe and the another cell which processes carrier aggregation with the cell in the current subframe includes a PUSCH bearing uplink signaling.

In 102, the user equipment may also specifically determine, according to formulas (10) and (11) or formulas (10) and (12), eighth transmission power of the PUSCH of the cell in the current subframe and the another cell which processes carrier aggregation with the cell in the current subframe, where:

$$\sum_{c \ne j} w(i) \cdot P_{PUSCH,c}(i) \le \left( P_{CMAX}(i) - P_{PUSCH,j}(i) - P_{PUSCH,k}(t) \right) \tag{10}$$

$$P_{PUSCH,j}(i) = \min \left\{ P_{PUSCH,j\_o}(i), \left( P_{CMAX}(i) - P_{PUSCH,k\_o}(i\text{-}1) \right) \right\} \tag{11}$$

$$P_{PUSCH,j}(i) = \min \left\{ P_{PUSCH,j\_o}(i), \left( P_{CMAX}(i) - P_{PUSCH,k\_o}(i+1) \right) \right\} \tag{12}$$

where $w(i)$ represents a weighting factor, whose value range is [0, 1]; c represents a cell; $\sum_{c} w(i) \cdot P_{PUSCH,c}(i)$ represents eighth transmission power of a PUSCH bearing no uplink control signaling of the cell in the current subframe and the another cell which processes carrier aggregation with the cell in the current subframe; $P_{CMAX}(i)$ represents maximum allowable power of the current subframe; $P_{PUSCH,k}(t)$ represents third transmission power, which is obtained by the user equipment by performing uplink power control, of a PUSCH bearing uplink signaling of the cell in the adjacent subframe and the another cell which processes carrier aggregation with the cell in the adjacent subframe; $P_{PUSCH,j\_o}(i)$ represents third transmission power, which is obtained by the user equipment by performing uplink power control, of the PUSCH bearing uplink signaling included in the current frame; $P_{PUSCH,k\_o}(i-1)$ represents first transmission power of a PUSCH bearing uplink signaling of the another cell which processes carrier aggregation with the cell in an adjacent subframe before the current subframe; and $P_{PUSCH,k\_o}(i+1)$ represents first transmission power of a PUSCH bearing uplink signaling of the another cell which processes carrier aggregation with the cell in an adjacent subframe after the current subframe.

It should be noted that, if the priority of the adjacent subframe before the current subframe is higher than the priority of the current subframe, the user equipment may perform relevant processing according to formulas (10) and (11); if the priority of the adjacent subframe after the current subframe is higher than the priority of the current subframe, the user equipment may perform relevant processing according to formulas (10) and (12).

In 102, the user equipment may also specifically determine, according to formula (13), ninth transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i) \tag{13}$$

where $w(i)$, $u(i)$, and $v(i)$ represent weighting factors, whose value range is [0, 1]; c represents a cell; $\sum_{c \neq j} w(i) \cdot P_{PUSCH,c}(i)$ represents ninth transmission power of a PUSCH bearing no uplink control signaling of the cell in the current subframe and the another cell which processes carrier aggregation with the cell in the current subframe; $P_{CMAX}(i)$ represents maximum allowable power of the current subframe; $P_{PUSCH,k}(t)$ represents the fourth transmission power, which is obtained by the user equipment by performing uplink power control, of a PUSCH bearing uplink signaling of the cell in the adjacent subframe and the another cell which processes carrier aggregation with the cell in the adjacent subframe; and $P_{PUSCH,j}(i)$ represents third transmission power, which is obtained by the user equipment by performing uplink power control, of a PUSCH bearing uplink control signaling in the current subframe.

For example, the PUSCH of the cell in the current subframe and the another cell which processes carrier aggregation with the cell in the current subframe includes a PUSCH bearing uplink signaling, and the cell in the current subframe and the another cell which processes carrier aggregation with the cell in the current subframe further includes a PUCCH.

In 102, the user equipment may also specifically determine, according to formulas (14) and (15) or formulas (14) and (16), tenth transmission power of the PUSCH of the cell in the current subframe and the another cell which processes carrier aggregation with the cell in the current subframe, where:

$$\sum_{c \neq j} w(i) \cdot P_{PUSCH,c}(i) \leq \left( P_{CMAX}(i) - P_{PUSCH,j}(i) - P_{PUSCH,k}(t) - P_{PUCCH}(i) \right) \tag{14}$$

$$P_{PUSCH,j}(i) = \min \left\{ P_{PUSCH,j\_o}(i), \left( P_{CMAX}(i) - P_{PUCCH}(i) - P_{PUSCH,k\_o}(i-1) \right) \right\} \tag{15}$$

$$P_{PUSCH,j}(i) = \min \left\{ P_{PUSCH,j\_o}(i), \left( P_{CMAX}(i) - P_{PUCCH}(i) - P_{PUSCH,k\_o}(i+1) \right) \right\} \tag{16}$$

where $w(i)$ represents a weighting factor, whose value range is [0, 1]; c represents a cell; $\sum_{c \neq j} w(i) \cdot P_{PUSCH,c}(i)$

represents the tenth transmission power of a PUSCH bearing no uplink control signaling of the cell in the current subframe and the another cell which processes carrier aggregation with the cell in the current subframe; $P_{PUCCH}(i)$ represents sixth transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; $P_{PUSCH,k}(t)$ represents fifth transmission power, which is obtained by the user equipment by performing uplink power control, of a PUSCH bearing uplink signaling of the cell in the adjacent subframe and the another cell which processes carrier aggregation with the cell in the adjacent subframe; $P_{PUSCH,j\_o}(i)$ represents fourth transmission power, which is obtained by the user equipment by performing uplink power control, of a PUSCH bearing uplink signaling included in the current frame; $P_{PUSCH,k}(i\text{-}1)$ represents second transmission power of a PUSCH bearing uplink signaling of the another cell which processes carrier aggregation with the cell in an adjacent subframe before the current subframe; or $P_{PUSCH,k\_o}(i\text{+}1)$ represents second transmission power of a PUSCH bearing uplink signaling of the another cell which processes carrier aggregation with the cell in an adjacent subframe after the current subframe.

It should be noted that, if the priority of the adjacent subframe before the current subframe is higher than the priority of the current subframe, the user equipment may perform relevant processing according to formulas (14) and (15); if the priority of the adjacent subframe after the current subframe is higher than the priority of the current subframe, the user equipment may perform relevant processing according to formulas (14) and (16).

In 102, the user equipment may also specifically determine, according to formula (17), eleventh transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i) - P_{PUCCH}(i) \tag{17}$$

where $w(i)$, $u(i)$, and $v(i)$ represent weighting factors, whose value range is [0, 1]; c represents a cell; $\sum_{c \neq j} w(i) \cdot P_{PUSCH,c}(i)$ represents eleventh transmission power of a PUSCH bearing no uplink control signaling of the cell in the current subframe and the another cell which processes carrier aggregation with the cell in the current subframe; $P_{PUCCH}(i)$ represents seventh transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; $P_{PUSCH,j}(i)$ represents fourth transmission power, which is obtained by the user equipment by performing uplink power control, of a PUSCH bearing uplink control signaling in the current subframe; and $P_{PUSCH,k}(t)$ represents sixth transmission power, which is obtained by the user equipment by performing uplink power control, of a PUSCH bearing uplink signaling of the cell in the adjacent subframe and the another cell which processes carrier aggregation with the cell in the adjacent subframe.

According to another optional implementation mode provided in embodiments of the present invention, in 101, the overlap determined by the user equipment includes: the PUSCH of the cell in the current subframe is overlapped with a PUCCH of the another cell in a first adjacent subframe, the another cell being carrier aggregation with the cell, and the PUSCH of the cell in the current subframe, or the PUCCH of the cell in the current subframe, or at least one of the PUSCH and a PUCCH of the cell in the current subframe is overlapped with a PUSCH bearing uplink signaling of the another cell in a second adjacent subframe, the another cell being carrier aggregation with the cell. The first adjacent subframe may be the same as or different from the second adjacent subframe, which is not limited in embodiments of the present invention.

For example, in 102, the user equipment may also specifically determine, according to formula (18), twelfth transmission power of the PUSCH of the cell in the current subframe and the another cell which processes carrier aggregation with the cell in the current subframe, where:

$$\sum_{c} w(i) \cdot P_{PUSCH,c}(i) \leq \left( P_{CMAX}(i) - P_{PUSCH,k}(t2) - \max\left( P_{PUCCH}(i), \ P_{PUCCH}(t1) \right) \right) \tag{18}$$

where $w(i)$ represents a weighting factor, whose value range is [0, 1]; c represents a cell; $\sum_{c} w(i) \cdot P_{PUSCH,c}(i)$ represents the twelfth transmission power of the PUSCH of the cell in the current subframe and the another cell which processes carrier aggregation with the cell in the current subframe; $P_{PUCCH}(i)$ represents eighth transmission power, which is obtained by the user equipment by performing uplink power control, of the PUCCH of the another cell which processes carrier aggregation with the cell in the current subframe; $P_{PUCCH}(t1)$ represents first transmission power, which is obtained by the user equipment by performing uplink power control, of a PUCCH of the another cell which processes carrier aggregation with the cell in the first adjacent subframe; $P_{CMAX}(i)$ represents maximum allowable power of the current subframe; and $P_{PUSCH,k}(t)$ represents first transmission power, which is obtained by the user equipment by performing uplink power control, of a PUSCH bearing uplink control signaling of the cell in the second adjacent subframe and the another cell which processes carrier aggregation with the cell in the second adjacent subframe.

For example, in 102, the user equipment may also specifically determine, according to formula (19), thirteenth transmission power of the PUSCH of the cell in the current subframe and the another cell which processes carrier aggregation with the cell in the current subframe, where:

$$\sum_c w(i) \cdot P_{PUSCH,c}(i) + u(i) \cdot P_{PUSCH,k}(t2) \le \left( P_{CMAX}(i) - \max\left( P_{PUCCH}(i),\ P_{PUCCH}(t1) \right) \right) \tag{19}$$

where $w(i)$ and $u(i)$ represent weighting factors, whose value range is [0, 1]; c represents a cell; $\sum_c w(i) \cdot P_{PUSCH,c}(i)$ represents the thirteenth transmission power of the PUSCH of the cell in the current subframe and the another cell which processes carrier aggregation with the cell in the current subframe; $P_{PUCCH}(i)$ represents ninth transmission power, which is obtained by the user equipment by performing uplink power control, of the PUCCH of the another cell which processes carrier aggregation with the cell in the current subframe; $P_{PUCCH}(t1)$ represents second transmission power, which is obtained by the user equipment by performing uplink power control, of the PUCCH of the another cell which processes carrier aggregation with the cell in the first adjacent subframe; $P_{CMAX}(i)$ represents maximum allowable power of the current subframe; and $P_{PUSCH,k}(t2)$ represents second transmission power, which is obtained by the user equipment by performing uplink power control, of the PUSCH bearing uplink control signaling of the cell in the second adjacent subframe and the another cell which processes carrier aggregation with the cell in the second adjacent subframe.

For example, the PUSCH of the cell in the current subframe and the another cell which processes carrier aggregation with the cell in the current subframe includes a PUSCH bearing uplink signaling.

In 102, the user equipment may also specifically determine, according to formulas (20) and (21) or formulas (20) and (22), fourteenth transmission power of the PUSCH of the cell in the current subframe and the another cell which processes carrier aggregation with the cell in the current subframe, where:

$$\sum_{c \neq j} w(i) \cdot P_{PUSCH,c}(i) \le \left( P_{CMAX}(i) - P_{PUSCH,j}(i) - P_{PUSCH,k}(t2) - P_{PUCCH}(t1) \right) \tag{20}$$

$$P_{PUSCH,j}(i) = \min\left\{ P_{PUSCH,j\_o}(i), \left( P_{CMAX}(i) - P_{PUSCH,k\_o}(i\text{-}1) \right) \right\} \tag{21}$$

$$P_{PUSCH,j}(i) = \min\left\{ P_{PUSCH,j\_o}(i), \left( P_{CMAX}(i) - P_{PUSCH,k\_o}(i+1) \right) \right\} \tag{22}$$

where $w(i)$ represents a weighting factor, whose value range is [0, 1]; c represents a cell; $\sum_{c \neq j} w(i) \cdot P_{PUSCH,c}(i)$ represents fourteenth transmission power of a PUSCH bearing no uplink control signaling of the cell in the current subframe and the another cell which processes carrier aggregation with the cell in the current subframe; $P_{PUCCH}(t1)$ represents third transmission power, which is obtained by the user equipment by performing uplink power control, of the PUCCH of the another cell which processes carrier aggregation with the cell in the first adjacent subframe; $P_{CMAX}(i)$ represents maximum allowable power of the current subframe; $P_{PUSCH,j\_o}(i)$ represents fifth transmission power, which is obtained by the user equipment by performing uplink power control, of the PUSCH bearing uplink signaling in the current frame; $P_{PUSCH,k}(t2)$ represents third transmission power, which is obtained by the user equipment by performing uplink power control, of a PUSCH bearing uplink signaling of the cell in the second adjacent subframe and the another cell which processes carrier aggregation with the cell in the second adjacent subframe; $P_{PUSCH,k\_o}(i\text{-}1)$ represents third transmission power of a PUSCH bearing uplink signaling of the another cell which processes carrier aggregation with the cell in a second adjacent subframe before the current subframe; or $P_{PUSCH,k\_o}(i\text{+}1)$ represents third transmission power of a PUSCH bearing uplink signaling of the another cell which processes carrier aggregation with the cell in a second adjacent subframe after the current subframe.

It should be noted that if the priority of the second adjacent subframe before the current subframe is higher than the priority of the current subframe, the user equipment may perform relevant processing according to formulas (20) and (21); if the priority of the second adjacent subframe after the current subframe is higher than the priority of the current subframe, the user equipment may perform relevant processing according to formulas (20) and (22).

In 102, the user equipment may also specifically determine, according to formula (23), fifteenth transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) + v(i) \cdot P_{PUSCH,k}(t2) \leq \left( P_{CMAX}(i) - P_{PUCCH}(t1) \right) \tag{23}$$

where $w(i)$, $u(i)$, and $v(i)$ represent weighting factors, whose value range is [0, 1]; c represents a cell; $\sum_{c \neq j} w(i) \cdot P_{PUSCH,c}(i)$ represents fifteenth transmission power of a PUSCH bearing no uplink control signaling of the cell in the current subframe and the another cell which processes carrier aggregation with the cell in the current subframe; $P_{PUCCH}(t1)$ represents fourth transmission power, which is obtained by the user equipment by performing uplink power control, of the PUCCH of the another cell which processes carrier aggregation with the cell in the first adjacent subframe; $P_{CMAX}(i)$ represents maximum allowable power of the current subframe; $P_{PUSCH,j\_o}(i)$ represents sixth transmission power, which is obtained by the user equipment by performing uplink power control, of a PUSCH bearing uplink signaling in the current frame; $P_{PUSCH,j}(i)$ represents fifth transmission power, which is obtained by the user equipment by performing uplink power control, of the PUSCH bearing uplink control signaling in the current subframe; and $P_{PUSCH,k}(t2)$ represents fourth transmission power, which is obtained by the user equipment by performing uplink power control, of a PUSCH bearing uplink signaling of the cell in the second adjacent subframe and the another cell which processes carrier aggregation with the cell in the second adjacent subframe.

For example, the PUSCH of the cell in the current subframe and the another cell which processes carrier aggregation with the cell in the current subframe includes a PUSCH bearing uplink control signaling, and the cell in the current subframe and the another cell which processes carrier aggregation with the cell in the current subframe further includes a PUCCH.

In 102, the user equipment may also specifically determine, according to formulas (24) and (25) or formulas (24) and (26), sixteenth transmission power of the PUSCH of the cell in the current subframe and the another cell which processes carrier aggregation with the cell in the current subframe, where:

$$\sum_{c \neq j} w(i) \cdot P_{PUSCH,c}(i) \leq \left( P_{CMAX}(i) - P_{PUSCH,j}(i) - P_{PUSCH,k}(t2) - \max\left( P_{PUCCH}(i), \; P_{PUCCH}(t1) \right) \right) \tag{24}$$

$$P_{PUSCH,j}(i) = \min\left\{ P_{PUSCH,j\_o}(i), \left( P_{CMAX}(i) - P_{PUCCH}(i) - P_{PUSCH,k\_o}(i\text{-}1) \right) \right\} \tag{25}$$

$$P_{PUSCH,j}(i) = \min\left\{ P_{PUSCH,j\_o}(i), \left( P_{CMAX}(i) - P_{PUCCH}(i) - P_{PUSCH,k\_o}(i\text{+}1) \right) \right\} \tag{26}$$

where $w(i)$ represents a weighting factor, whose value range is [0, 1]; c represents a cell; $\sum_{c \neq j} w(i) \cdot P_{PUSCH,c}(i)$ represents sixteenth transmission power of a PUSCH bearing no uplink control signaling of the cell in the current subframe

and the another cell which processes carrier aggregation with the cell in the current subframe; $P_{PUCCH}(t1)$ represents fifth transmission power, which is obtained by the user equipment by performing uplink power control, of the PUCCH of the another cell which processes carrier aggregation with the cell in the first adjacent subframe; $P_{PUCCH}(i)$ represents tenth transmission power, which is obtained by the user equipment by performing uplink power control, of the PUCCH of the another cell which processes carrier aggregation with the cell in the current subframe; $P_{CMAX}(i)$ represents maximum allowable power of the current subframe; $P_{PUSCH,j\_o}(i)$ represents sixth transmission power, which is obtained by the user equipment by performing uplink power control, of the PUSCH bearing uplink signaling in the current frame; $P_{PUSCH,k}(t2)$ represents fifth transmission power, which is obtained by the user equipment by performing uplink power control, of a PUSCH bearing uplink signaling of the cell in the second adjacent subframe and the another cell which processes carrier aggregation with the cell in the second adjacent subframe; $P_{PUSCH,k\_o}(i\text{-}1)$ represents fourth transmission power of a PUSCH bearing uplink signaling of the another cell which processes carrier aggregation with the cell in a second adjacent sub frame before the current subframe; and $P_{PUSCH,k\_o}(i\text{+}1)$ represents fourth transmission power of a PUSCH bearing uplink signaling of the another cell which processes carrier aggregation with the cell in a second adjacent subframe after the current subframe.

It should be noted that if the priority of the second adjacent subframe before the current subframe is higher than the priority of the current subframe, the user equipment may perform relevant processing according to formulas (24) and (25); if the priority of the second adjacent subframe after the current subframe is higher than the priority of the current subframe, the user equipment may perform relevant processing according to formulas (24) and (26).

In 102, the user equipment may also specifically determine according to formula (27), seventeenth transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) + v(i) \cdot P_{PUSCH,k}(t2) \leq \left( P_{CMAX}(i) - \max\left( P_{PUCCH}(i),\ P_{PUCCH}(t1) \right) \right) \quad (27)$$

where $w(i)$, $u(i)$, and $v(i)$ represent weighting factors, whose value range is [0, 1]; c represents a cell; $\sum_{c \neq j} w(i) \cdot P_{PUSCH,c}(i)$ represents seventeenth transmission power of a PUSCH bearing no uplink control signaling of the cell in the current subframe and the another cell which processes carrier aggregation with the cell in the current subframe; $P_{PUCCH}(t1)$ represents sixth transmission power, which is obtained by the user equipment by performing uplink power control, of the PUCCH of the another cell which processes carrier aggregation with the cell in the first adjacent subframe; $P_{PUCCH}(i)$ represents eleventh transmission power, which is obtained by the user equipment by performing uplink power control, of the PUCCH of the another cell which processes carrier aggregation with the cell in the current subframe; $P_{CMAX}(i)$ represents maximum allowable power of the current subframe; $P_{PUSCH,j}(i)$ represents sixth transmission power of a PUSCH bearing uplink control signaling in the current subframe; and $P_{PUSCH,k}(t2)$ represents the sixth transmission power, which is obtained by the user equipment by performing uplink power control, of a PUSCH bearing uplink signaling of the cell in the second adjacent subframe and the another cell which processes carrier aggregation with the cell in the second adjacent subframe.

It should be noted that, if the other cells subjected to carrier aggregation with the cell in the current subframe do not have a PUCCH, the transmission power of the PUCCH may be 0.

In this embodiment, user equipment determines an overlap between an uplink channel of a cell in a current subframe and an uplink channel of the another cell which processes carrier aggregation with the cell in an adjacent subframe, so that the user equipment can determine transmission power of a PUSCH of the cell in the current subframe and the another cell which processes carrier aggregation with the cell in the current subframe. As a result, the problem that the uplink power control performed by the user equipment according to the prior art is not accurate is solved and thus the uplink data transmitting quality is improved.

It should be noted that, for brevity, the foregoing method embodiments are represented as a series of actions. But persons skilled in the art should understand that the present invention is not limited to the order of the described actions, because according to the present invention, some steps may adopt other order or occur simultaneously. It should be further understood by persons skilled in the art that the described embodiments all belong to exemplary embodiments, and the involved actions and modules are not necessarily required by the present invention.

In the foregoing embodiments, the description of each of the embodiments has respective focuses. For a part that is not described in detail in a certain embodiment, reference may be made to related descriptions in other embodiments.

FIG. 2 is a schematic structural diagram of a user equipment according to another embodiment of the present invention. As shown in FIG. 2, the user equipment according to this embodiment may include an overlap determining unit 21 and a power determining unit 22. The overlap determining unit 21 is configured to determine an overlap between an uplink channel of a cell in a current subframe and an uplink channel of another cell in an adjacent subframe, the cell being carrier aggregation with the another cell. The power determining unit 22 is configured to determine according to the overlap determined by the overlap determining unit 21, transmission power of a PUSCH of the cell in the current subframe and the another cell in the current subframe, the cell being carrier aggregation with the another cell.

Functions of the user equipment illustrated in above embodiments corresponding to FIG. 1 may be implemented by the user equipment provided in this embodiment.

According to an optional implementation mode provided in the embodiment of the present invention, the overlap determined by the overlap determining unit 21 may include: the PUSCH of the cell in the current subframe is overlapped with a PUCCH of the another cell in the adjacent subframe, the another cell being carrier aggregation with the cell.

For example, the power determining unit 22 may specifically determine according to formula (1), first transmission power of the PUSCH of the cell in the current subframe and the another cell which processes carrier aggregation with the cell in the current subframe, where:

$$\sum_c w(i) \cdot P_{PUSCH,c}(i) \le \left( P_{CMAX}(i) - \max\left( P_{PUCCH}(i), \ P_{PUCCH}(t) \right) \right) \tag{1}$$

where $w(i)$ represents a weighting factor, whose value range is [0, 1]; c represents a cell; $\sum_c w(i) \cdot P_{PUSCH,c}(i)$ represents the first transmission power of the PUSCH of the cell in the current subframe and the another cell which processes carrier aggregation with the cell in the current subframe; $P_{PUCCH}(i)$ represents first transmission power, which is obtained by the user equipment by performing uplink power control, of a PUCCH of the another cell which processes carrier aggregation with the cell in the current subframe; $P_{PUCCH}(t)$ represents first transmission power, which is obtained by the user equipment by performing uplink power control, of the PUCCH of the another cell which processes carrier aggregation with the cell in the adjacent subframe; and $P_{CMAX}(i)$ represents maximum allowable power of the current subframe.

For example, the PUSCH of the cell in the current subframe and the another cell which processes carrier aggregation with the cell in the current subframe includes a PUSCH bearing uplink signaling.

The power determining unit 22 may further determine, according to formulas (2) and (3), second transmission power of the PUSCH of the cell in the current subframe and the another cell which processes carrier aggregation with the cell in the current subframe, where:

$$\sum_{c \ne j} w(i) \cdot P_{PUSCH,c}(i) \le \left( P_{CMAX}(i) - P_{PUSCH,j}(i) - P_{PUCCH}(t) \right) \tag{2}$$

$$P_{PUSCH,j}(i) = \min\left\{ P_{PUSCH,j\_o}(i), \left( P_{CMAX}(i) - P_{PUCCH}(t) \right) \right\} \tag{3}$$

where $w(i)$ represents a weighting factor, whose value range is [0, 1]; c represents a cell; $\sum_{c \ne j} w(i) \cdot P_{PUSCH,c}(i)$ represents second transmission power of a PUSCH bearing no uplink control signaling of the cell in the current subframe, and in the another cell which processes carrier aggregation with the cell in the current subframe; $P_{PUCCH}(t)$ represents second transmission power, which is obtained by the user equipment by performing uplink power control, of the PUCCH of the another cell which processes carrier aggregation with the cell in the current subframe; $P_{CMAX}(i)$ represents maximum allowable power of the current subframe; and $P_{PUSCH,j\_o}(i)$ represents first transmission power, which is obtained by the user equipment by performing uplink power control, of the PUSCH bearing uplink signaling in the current subframe.

The power determining unit 22 may further determine, according to formula (4), third transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) \leq \left( P_{CMAX}(i) - P_{PUCCH}(t) \right)$$

$$(4)$$

where $w(i)$ and $u(i)$ represent weighting factors, whose value range is [0, 1]; c represents a cell; $\sum_{c \neq j} w(i) \cdot P_{PUSCH,c}(i)$ represents third transmission power of a PUSCH bearing no uplink control signaling of the cell in the current subframe, and in the another cell which processes carrier aggregation with the cell in the current subframe; $P_{PUCCH}(t)$ represents third transmission power, which is obtained by the user equipment by performing uplink power control, of the PUCCH of the another cell which processes carrier aggregation with the cell in the current subframe; $P_{CMAX}(i)$ represents maximum allowable power of the current subframe; and $P_{PUSCH,j}(i)$ represents first transmission power, which is obtained by the user equipment by performing uplink power control, of the PUSCH bearing uplink control signaling in the current subframe.

For example, the PUSCH of the cell in the current subframe and the another cell which processes carrier aggregation with the cell in the current subframe includes a PUSCH bearing uplink control signaling, and the cell in the current subframe and the another cell which processes carrier aggregation with the cell in the current subframe further includes a PUCCH.

The power determining unit 22 may further determine, according to formulas (5) and (6), fourth transmission power of the PUSCH of the cell in the current subframe and the another cell which processes carrier aggregation with the cell in the current subframe, where:

$$\sum_{c \neq j} w(i) \cdot P_{PUSCH,c}(i) \leq \left( P_{CMAX}(i) - P_{PUSCH,j}(i) - \max\left( P_{PUCCH}(i), \ P_{PUCCH}(t) \right) \right)$$

$$(5)$$

$$P_{PUSCH,j}(i) = \min\left\{ P_{PUSCH,j\_o}(i), \left( P_{CMAX}(i) - \max\left( P_{PUCCH}(i), \ P_{PUCCH}(t) \right) \right) \right\}$$

$$(6)$$

where $w(i)$ represents a weighting factor, whose value range is [0, 1]; c represents a cell; $\sum_{c \neq j} w(i) \cdot P_{PUSCH,c}(i)$ represents fourth transmission power of a PUSCH bearing no uplink control signaling of the cell in the current subframe and the another cell which processes carrier aggregation with the cell in the current subframe; $P_{PUCCH}(i)$ represents second transmission power, which is obtained by the user equipment by performing uplink power control, of the PUCCH of the another cell which processes carrier aggregation with the cell in the current subframe; $P_{PUCCH}(t)$ represents fourth transmission power, which is obtained by the user equipment by performing uplink power control, of the PUCCH of the another cell which processes carrier aggregation with the cell in the adjacent subframe,; $P_{CMAX}(i)$ represents maximum allowable power of the current subframe; and $P_{PUSCH,j\_o}(i)$ represents second transmission power, which is obtained by the user equipment by performing uplink power control, of a PUSCH bearing uplink signaling included in the current frame.

The power determining unit 22 may further determine, according to formula (7), fifth transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) \leq \left( P_{CMAX}(i) - \max\left( P_{PUCCH}(i), \ P_{PUCCH}(t) \right) \right)$$

$$(7)$$

where $w(i)$ and $u(i)$ represent weighting factors, whose value range is [0, 1]; c represents a cell; $\sum_{c \neq j} w(i) \cdot P_{PUSCH,c}(i)$ represents fifth transmission power of a PUSCH bearing no uplink control signaling of the cell in the current subframe and the another cell which processes carrier aggregation with the cell in the current subframe; $P_{PUCCH}(i)$ represents third transmission power, which is obtained by the user equipment by performing uplink power control, of the PUCCH of the another cell which processes carrier aggregation with the cell in the current subframe; $P_{PUCCH}(t)$ represents fifth transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; and $P_{PUSCH,j}(i)$ represents second transmission power, which is obtained by the user equipment by performing uplink power control, of the PUSCH bearing uplink control signaling in the current subframe.

According to another optional implementation mode provided in the embodiment of the present invention, the overlap determined by the overlap determining unit 21 may further include: the PUSCH of the cell in the current subframe, or a PUCCH of the cell in the current subframe, or at least one of PUSCH and the PUCCH of the cell in the current subframe is overlapped with a PUSCH bearing uplink signaling in the another cell, in the adjacent subframe, the another cell being carrier aggregation with the cell.

For example, the power determining unit 22 may specifically determine, according to formula (8), sixth transmission power of the PUSCH of the cell in the current subframe and the another cell which processes carrier aggregation with the cell in the current subframe, where:

$$\sum_c w(i) \cdot P_{PUSCH,c}(i) \le \left( P_{CMAX}(i) - P_{PUSCH,k}(t) - P_{PUCCH}(i) \right) \tag{8}$$

where $w(i)$ represents a weighting factor, whose value range is [0, 1]; c represents a cell; $\sum_c w(i) \cdot P_{PUSCH,c}(i)$ represents the sixth transmission power of the PUSCH of the cell in the current subframe and the another cell which processes carrier aggregation with the cell in the current subframe; $P_{PUCCH}(i)$ represents fourth transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; and $P_{PUSCH,k}(t)$ represents first transmission power, which is obtained by the user equipment by performing uplink power control, of the PUSCH bearing uplink control signaling of the cell in the adjacent subframe and the another cell which processes carrier aggregation with the cell in the adjacent subframe.

The power determining unit 22 may further determine, according to formula (9), seventh transmission power of the PUSCH of the cell in the current subframe and the another cell which processes carrier aggregation with the cell in the current subframe, where:

$$\sum_c w(i) \cdot P_{PUSCH,c}(i) + u(i) \cdot P_{PUSCH,k}(t) + v(i) \cdot P_{PUCCH}(i) \le P_{CMAX}(i) \tag{9}$$

where $w(i)$, $u(i)$, and $v(i)$ represent weighting factors, whose value range is [0, 1]; c represents a cell; $\sum_c w(i) \cdot P_{PUSCH,c}(i)$ represents seventh transmission power of the PUSCH of the cell in the current subframe and the another cell which processes carrier aggregation with the cell in the current subframe; $P_{PUCCH}(i)$ represents fifth transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; and $P_{PUSCH,k}(t)$ represents second transmission power, which is obtained by the user equipment by performing uplink power control, of a PUSCH bearing uplink signaling of the cell in the adjacent subframe and the another cell which processes carrier aggregation with the cell in the adjacent subframe.

For example, the PUSCH of the cell in the current subframe and the another cell which processes carrier aggregation with the cell in the current subframe includes a PUSCH bearing uplink signaling.

The power determining unit 22 may further determine, according to formulas (10) and (11) or formulas (10) and (12), eighth transmission power of the PUSCH of the cell in the current subframe and the another cell which processes carrier aggregation with the cell in the current subframe, where:

$$\sum_{c \ne j} w(i) \cdot P_{PUSCH,c}(i) \le \left( P_{CMAX}(i) - P_{PUSCH,j}(i) - P_{PUSCH,k}(t) \right) \tag{10}$$

$$P_{PUSCH,j}(i) = \min\left\{P_{PUSCH,j\_o}(i), \left(P_{CMAX}(i) - P_{PUSCH,k\_o}(i\text{-}1)\right)\right\}$$ (11)

$$P_{PUSCH,j}(i) = \min\left\{P_{PUSCH,j\_o}(i), \left(P_{CMAX}(i) - P_{PUSCH,k\_o}(i+1)\right)\right\}$$ (12)

where $w(i)$ represents a weighting factor, whose value range is [0, 1]; c represents a cell; $\sum_{c \neq j} w(i) \cdot P_{PUSCH,c}(i)$ represents eighth transmission power of a PUSCH bearing no uplink control signaling of the cell in the current subframe and the another cell which processes carrier aggregation with the cell in the current subframe; $P_{CMAX}(i)$ represents maximum allowable power of the current subframe; $P_{PUSCH,k}(t)$ represents third transmission power, which is obtained by the user equipment by performing uplink power control, of the PUSCH bearing uplink signaling in the cell in the adjacent subframe and the another cell which processes carrier aggregation with the cell in the adjacent subframe; $P_{PUSCH,j\_o}(i)$ represents third transmission power, which is obtained by the user equipment by performing uplink power control, of the PUSCH bearing uplink signaling in the current frame; $P_{PUSCH,k\_o}(i\text{-}1)$ represents first transmission power of a PUSCH bearing uplink signaling of the another cell which processes carrier aggregation with the cell in an adjacent subframe before the current subframe; and $P_{PUSCH,k-o}(i+1)$ represents first transmission power of a PUSCH bearing uplink signaling in the another cell which processes carrier aggregation with the cell in an adjacent subframe after the current subframe.

It should be noted that if the priority of the adjacent subframe before the current subframe is higher than the priority of the current subframe, the user equipment may perform relevant processing according to formulas (10) and (11); if the priority of the adjacent subframe after the current subframe is higher than the priority of the current subframe, the user equipment may perform relevant processing according to formulas (10) and (12).

The power determining unit 22 may further determine, according to formula (13), ninth transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i)$$ (13)

where $w(i)$, $u(i)$, and $v(i)$ represent weighting factors, whose value range is [0, 1]; c represents a cell; $\sum_{c \neq j} w(i) \cdot P_{PUSCH,c}(i)$ represents ninth transmission power of a PUSCH bearing no uplink control signaling of the cell in the current subframe and the another cell which processes carrier aggregation with the cell in the current subframe; $P_{CMAX}(i)$ represents maximum allowable power of the current subframe; $P_{PUSCH,k}(t)$ represents the fourth transmission power, which is obtained by the user equipment by performing uplink power control, of a PUSCH bearing uplink signaling of the cell in the adjacent subframe and the another cell which processes carrier aggregation with the cell in the adjacent subframe; and $P_{PUSCH,j}(i)$ represents third transmission power, which is obtained by the user equipment by performing uplink power control, of the PUSCH bearing uplink control signaling in the current subframe.

For example, the PUSCH of the cell in the current subframe and the another cell which processes carrier aggregation with the cell in the current subframe includes a PUSCH bearing uplink signaling, and the cell in the current subframe and the another cell which processes carrier aggregation with the cell in the current subframe further include a PUCCH.

The power determining unit 22 may further determine, according to formulas (14) and (15) or formulas (14) and (16), tenth transmission power of the PUSCH of the cell in the current subframe and the another cell which processes carrier aggregation with the cell in the current subframe, where:

$$\sum_{c \neq j} w(i) \cdot P_{PUSCH,c}(i) \leq \left(P_{CMAX}(i) - P_{PUSCH,j}(i) - P_{PUSCH,k}(t) - P_{PUCCH}(i)\right)$$ (14)

$$P_{PUSCH,j}(i) = \min\left\{ P_{PUSCH,j\_o}(i), \left( P_{CMAX}(i) - P_{PUCCH}(i) - P_{PUSCH,k\_o}(i-1) \right) \right\} \quad (15)$$

$$P_{PUSCH,j}(i) = \min\left\{ P_{PUSCH,j\_o}(i), \left( P_{CMAX}(i) - P_{PUCCH}(i) - P_{PUSCH,k\_o}(i+1) \right) \right\} \quad (16)$$

where $w(i)$ represents a weighting factor, whose value range is [0, 1]; c represents a cell; $\sum_{c \neq j} w(i) \cdot P_{PUSCH,c}(i)$ represents the tenth transmission power of a PUSCH bearing no uplink control signaling of the cell in the current subframe and the another cell which processes carrier aggregation with the cell in the current subframe; $P_{PUCCH}(i)$ represents sixth transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; $P_{PUSCH,k}(t)$ represents fifth transmission power, which is obtained by the user equipment by performing uplink power control, of a PUSCH bearing uplink signaling of the cell in the adjacent subframe and the another cell which processes carrier aggregation with the cell in the adjacent subframe; $P_{PUSCH,j-o}(i)$ represents fourth transmission power, which is obtained by the user equipment by performing uplink power control, of a PUSCH bearing uplink signaling in the current frame; $P_{PUSCH,k\_o}(i-1)$ represents second transmission power of a PUSCH bearing uplink signaling of the another cell which processes carrier aggregation with the cell in an adjacent subframe before the current subframe; and $P_{PUSCH,k-o}(i+1)$ *represents* second transmission power of a PUSCH bearing uplink signaling of the another cell which processes carrier aggregation with the cell in an adjacent subframe after the current subframe.

It should be noted that, if the priority of the adjacent subframe before the current subframe is higher than the priority of the current subframe, the user equipment may perform relevant processing according to formulas (14) and (15); if the priority of the adjacent subframe after the current subframe is higher than the priority of the current subframe, the user equipment may perform relevant processing according to formulas (14) and (16).

The power determining unit 22 may further determine, according to formula (17), eleventh transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i) - P_{PUCCH}(i) \quad (17)$$

where $w(i)$, $u(i)$, and $v(i)$ represent weighting factors, whose value range is [0, 1]; c represents a cell; $\sum_{c \neq j} w(i) \cdot P_{PUSCH,c}(i)$ represents eleventh transmission power of a PUSCH bearing no uplink control signaling of the cell in the current subframe and the another cell which processes carrier aggregation with the cell in the current subframe; $P_{PUCCH}(i)$ represents seventh transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; $P_{PUSCH,j}(i)$ represents fourth transmission power, which is obtained by the user equipment by performing uplink power control, of a PUSCH bearing uplink control signaling in the current subframe; and $P_{PUSCH,k}(t)$ represents sixth transmission power, which is obtained by the user equipment by performing uplink power control, of a PUSCH bearing uplink signaling of the cell in the adjacent subframe and the another cell which processes carrier aggregation with the cell in the adjacent subframe.

According to another optional implementation mode provided in the embodiment of the present invention, the overlap determined by the overlap determining unit 21 may include: the PUSCH of the cell in the current subframe is overlapped with the PUCCH of the another cell in a first adjacent subframe, the another cell beings carrier aggregation with the cell, and the PUSCH of the cell in the current subframe, or the PUCCH of the cell in the current subframe, or at least one of the PUSCH and a PUCCH of the cell in the current subframe is overlapped with a PUSCH bearing uplink signaling of the another cell in a second adjacent subframe, the another cell being carrier aggregation with the cell. The first adjacent subframe may be the same as or different from the second adjacent subframe, which is not limited in embodiments of the present invention.

For example, the power determining unit 22 may specifically determine, according to formula (18), twelfth transmission power of the PUSCH of the cell in the current subframe and the another cell which processes carrier aggregation with the cell in the current subframe, where:

$$\sum_c w(i) \cdot P_{PUSCH,c}(i) \le \left( P_{CMAX}(i) - P_{PUSCH,k}(t2) - \max\left( P_{PUCCH}(i), \ P_{PUCCH}(t1) \right) \right) \quad (18)$$

where $w(i)$ represents a weighting factor, whose value range is [0, 1]; c represents a cell; $\sum_c w(i) \cdot P_{PUSCH,c}(i)$ represents the twelfth transmission power of the PUSCH of the cell in the current subframe and the another cell which processes carrier aggregation with the cell in the current subframe; $P_{PUCCH}(i)$ represents eighth transmission power, which is obtained by the user equipment by performing uplink power control, of the PUCCH of the another cell which processes carrier aggregation with the cell in the current subframe; $P_{PUCCH}(t1)$ represents first transmission power, which is obtained by the user equipment by performing uplink power control, of a PUCCH of the another cell which processes carrier aggregation with the cell in the first adjacent subframe; $P_{CMAX}(i)$ represents maximum allowable power of the current subframe; and $P_{PUSCH,k}(t)$ represents first transmission power, which is obtained by the user equipment by performing uplink power control, of the PUSCH bearing uplink control signaling of the cell in the second adjacent subframe and the another cell which processes carrier aggregation with the cell in the second adjacent subframe.

For example, the power determining unit 22 may further determine, according to formula (19), thirteenth transmission power of the PUSCH of the cell in the current subframe and the another cell which processes carrier aggregation with the cell in the current subframe, where:

$$\sum_c w(i) \cdot P_{PUSCH,c}(i) + u(i) \cdot P_{PUSCH,k}(t2) \le \left( P_{CMAX}(i) - \max\left( P_{PUCCH}(i), \ P_{PUCCH}(t1) \right) \right) \quad (19)$$

where $w(i)$ and $u(i)$ represent weighting factors, whose value range is [0, 1]; c represents a cell; $\sum_c w(i) \cdot P_{PUSCH,c}(i)$ represents the thirteenth transmission power of the PUSCH of the cell in the current subframe and the another cell which processes carrier aggregation with the cell in the current subframe; $P_{PUCCH}(i)$ represents ninth transmission power, which is obtained by the user equipment by performing uplink power control, of the PUCCH of the another cell which processes carrier aggregation with the cell in the current subframe; $P_{PUCCH}(t1)$ represents second transmission power, which is obtained by the user equipment by performing uplink power control, of the PUCCH of the another cell which processes carrier aggregation with the cell in the first adjacent subframe; $P_{CMAX}(i)$ represents maximum allowable power of the current subframe; and $P_{PUSCH,k}(t2)$ represents second transmission power, which is obtained by the user equipment by performing uplink power control, of a PUSCH bearing uplink control signaling of the cell in the second adjacent subframe and the another cell which processes carrier aggregation with the cell in the second adjacent subframe.

For example, the PUSCH of the cell in the current subframe and the another cell which processes carrier aggregation with the cell in the current subframe includes a PUSCH bearing uplink signaling.

The power determining unit 22 may further determine, according to formulas (20) and (21) or formulas (20) and (22), fourteenth transmission power of the PUSCH of the cell in the current subframe and the another cell which processes carrier aggregation with the cell in the current subframe, where:

$$\sum_{c \ne j} w(i) \cdot P_{PUSCH,c}(i) \le \left( P_{CMAX}(i) - P_{PUSCH,j}(i) - P_{PUSCH,k}(t2) - P_{PUCCH}(t1) \right) \quad (20)$$

$$P_{PUSCH,j}(i) = \min\left\{ P_{PUSCH,j\_o}(i), \left( P_{CMAX}(i) - P_{PUSCH,k\_o}(i\text{-}1) \right) \right\} \quad (21)$$

$$P_{PUSCH,j}(i) = \min\left\{ P_{PUSCH,j\_o}(i), \left( P_{CMAX}(i) - P_{PUSCH,k\_o}(i+1) \right) \right\} \quad (22)$$

where $w(i)$ represents a weighting factor, whose value range is [0, 1]; c represents a cell; $\sum_{c \neq j} w(i) \cdot P_{PUSCH,c}(i)$ represents fourteenth transmission power of a PUSCH bearing no uplink control signaling of the cell in the current subframe and the another cell which processes carrier aggregation with the cell in the current subframe; $P_{PUCCH}(t1)$ represents third transmission power, which is obtained by the user equipment by performing uplink power control, of the PUCCH of the another cell which processes carrier aggregation with the cell in the first adjacent subframe; $P_{CMAX}(i)$ represents maximum allowable power of the current subframe; $P_{PUSCH,j\_o}(i)$ represents fifth transmission power, which is obtained by the user equipment by performing uplink power control, of the PUSCH bearing uplink signaling in the current frame; $P_{PUSCH,k}(t2)$ represents third transmission power, which is obtained by the user equipment by performing uplink power control, of the PUSCH bearing uplink signaling of the cell in the second adjacent subframe and the another cell which processes carrier aggregation with the cell in the second adjacent subframe; $P_{PUSCH,k\_o}(i\text{-}1)$ represents third transmission power of a PUSCH bearing uplink signaling of the another cell which processes carrier aggregation with the cell in a second adjacent subframe before the current subframe; and $P_{PUSCH,k-o}(i\text{+}1)$ represents third transmission power of a PUSCH bearing uplink signaling of the another cell which processes carrier aggregation with the cell in a second adjacent subframe after the current subframe.

It should be noted that, if the priority of the second adjacent subframe before the current subframe is higher than the priority of the current subframe, the user equipment may perform relevant processing according to formulas (20) and (21); if the priority of the second adjacent subframe after the current subframe is higher than the priority of the current subframe, the user equipment may perform relevant processing according to formulas (20) and (22).

The power determining unit 22 may further determine, according to formula (23), fifteenth transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) + v(i) \cdot P_{PUSCH,k}(t2) \leq \left( P_{CMAX}(i) - P_{PUCCH}(t1) \right) \tag{23}$$

where $w(i)$, $u(i)$, and $v(i)$ represent weighting factors, whose value range is [0, 1]; c represents a cell; $\sum_{c \neq j} w(i) \cdot P_{PUSCH,c}(i)$ represents fifteenth transmission power of the PUSCH bearing no uplink control signaling of the cell in the current subframe and the another cell which processes carrier aggregation with the cell in the current subframe; $P_{PUCCH}(t1)$ represents fourth transmission power, which is obtained by the user equipment by performing uplink power control, of the PUCCH of the another cell which processes carrier aggregation with the cell in the first adjacent subframe; $P_{CMAX}(i)$ represents maximum allowable power of the current subframe; $P_{PUSCH,j\_o}(i)$ represents sixth transmission power of a PUSCH bearing uplink signaling in the current frame; $P_{PUSCH,j}(i)$ represents fifth transmission power, which is obtained by the user equipment by performing uplink power control, of the PUSCH bearing uplink control signaling in the current subframe; and $P_{PUSCH,k}(t2)$ represents fourth transmission power, which is obtained by the user equipment by performing uplink power control, of a PUSCH bearing uplink signaling in the cell in the second adjacent subframe and the another cell which processes carrier aggregation with the cell in the second adjacent subframe.

For example, the PUSCH of the cell in the current subframe and the another cell which processes carrier aggregation with the cell in the current subframe includes a PUSCH bearing uplink control signaling, and the cell in the current subframe and the another cell which processes carrier aggregation with the cell in the current subframe further include a PUCCH.

The power determining unit 22 may specifically determine, according to formulas (24) and (25) or formulas (24) and (26), sixteenth transmission power of the PUSCH of the cell in the current subframe and the another cell which processes carrier aggregation with the cell in the current subframe, where:

$$\sum_{c \neq j} w(i) \cdot P_{PUSCH,c}(i) \leq \left( P_{CMAX}(i) - P_{PUSCH,j}(i) - P_{PUSCH,k}(t2) - \max \left( P_{PUCCH}(i), \ P_{PUCCH}(t1) \right) \right) \tag{24}$$

$$P_{PUSCH,j}(i) = \min \left\{ P_{PUSCH,j\_o}(i), \left( P_{CMAX}(i) - P_{PUCCH}(i) - P_{PUSCH,k\_o}(i\text{-}1) \right) \right\} \tag{25}$$

$$P_{PUSCH,j}(i) = \min\left\{P_{PUSCH,j\_o}(i), \left(P_{CMAX}(i) - P_{PUCCH}(i) - P_{PUSCH,k\_o}(i+1)\right)\right\} \qquad (26)$$

where $w(i)$ represents a weighting factor, whose value range is [0, 1]; c represents a cell; $\sum_{c \neq j} w(i) \cdot P_{PUSCH,c}(i)$ represents sixteenth transmission power of a PUSCH bearing no uplink control signaling of the cell in the current subframe and the another cell which processes carrier aggregation with the cell in the current subframe; $P_{PUCCH}(t1)$ represents fifth transmission power, which is obtained by the user equipment by performing uplink power control, of the PUCCH of the another cell which processes carrier aggregation with the cell in the first adjacent subframe; $P_{PUCCH}(i)$ represents tenth transmission power, which is obtained by the user equipment by performing uplink power control, of the PUCCH of the another cell which processes carrier aggregation with the cell in the current subframe; $P_{CMAX}(i)$ represents maximum allowable power of the current subframe; $P_{PUSCH,j\_o}(i)$ represents sixth transmission power, which is obtained by the user equipment by performing uplink power control, of the PUSCH bearing uplink signaling in the current frame; $P_{PUSCH,k}(t2)$ represents fifth transmission power of a PUSCH bearing uplink signaling of the cell in the second adjacent subframe and the another cell which processes carrier aggregation with the cell in the second adjacent subframe; $P_{PUSCH,k-o}(i-1)$ represents fourth transmission power of a PUSCH bearing uplink signaling of the another cell which processes carrier aggregation with the cell in a second adjacent subframe before the current subframe; and $P_{PUSCH,k\_o}(i+1)$ represents fourth transmission power of a PUSCH bearing uplink signaling of the another cell which processes carrier aggregation with the cell in a second adjacent subframe after the current subframe.

It should be noted that, if the priority of the second adjacent subframe before the current subframe is higher than the priority of the current subframe, the user equipment may perform relevant processing according to formulas (24) and (25); if the priority of the second adjacent subframe after the current subframe is higher than the priority of the current subframe, the user equipment may perform relevant processing according to formulas (24) and (26).

The power determining unit 22 may further determine, according to formula (27), seventeenth transmission power of the PUSCH of the cell in the current subframe and the another cell which processes carrier aggregation with the cell in the current subframe, where:

$$\sum_{c \neq j} w(i) \cdot P_{PUSCH,c}(i) + u(i) \cdot P_{PUSCH,j}(i) + v(i) \cdot P_{PUSCH,k}(t2) \leq \left(P_{CMAX}(i) - \max\left(P_{PUCCH}(i), \ P_{PUCCH}(t1)\right)\right) \qquad (27)$$

where $w(i)$, $u(i)$, and $v(i)$ represent weighting factors, whose value range is [0, 1]; c represents a cell; $\sum_{c \neq j} w(i) \cdot P_{PUSCH,c}(i)$ represents seventeenth transmission power of a PUSCH bearing no uplink control signaling of the cell in the current subframe and the another cell which processes carrier aggregation with the cell in the current subframe; $P_{PUCCH}(t1)$ represents sixth transmission power, which is obtained by the user equipment by performing uplink power control, of the PUCCH of the another cell which processes carrier aggregation with the cell in the first adjacent subframe; $P_{PUCCH}(i)$ represents eleventh transmission power, which is obtained by the user equipment by performing uplink power control, of the PUCCH of the another cell which processes carrier aggregation with the cell in the current subframe; $P_{CMAX}(i)$ represents maximum allowable power of the current subframe; $P_{PUSCH,j}(i)$ represents the sixth transmission power, which is obtained by the user equipment by performing uplink power control, of a PUSCH bearing uplink control signaling in the current subframe; and $P_{PUSCH,k}(t2)$ represents sixth transmission power, which is obtained by the user equipment by performing uplink power control, of a PUSCH bearing uplink signaling of the cell in the second adjacent subframe and the another cell which processes carrier aggregation with the cell in the second adjacent subframe.

It should be noted that if the other cells subjected to carrier aggregation with the cell in the current subframe do not have a PUCCH, the transmission power of the PUCCH may be 0.

In this embodiment, the user equipment determines through the overlap determining unit, an overlap between an uplink channel of a cell in a current subframe and an uplink channel of the another cell which processes carrier aggregation with the cell in an adjacent subframe, so that the power determining unit can determine according to the overlap determined by the overlap determining unit, transmission power of a PUSCH of the cell in the current subframe and the another cell which processes carrier aggregation with the cell in the current subframe. As a result, the problem that the uplink power control performed by the user equipment according to the prior art is not accurate is solved and thus the uplink data transmitting quality is improved.

An embodiment of the present invention also provides a processor, which is configured to determine an overlap between an uplink channel of a cell in a current subframe and an uplink channel of the another cell which processes carrier aggregation with the cell in an adjacent subframe, and determine according to the determined overlap, transmission power of a physical uplink shared channel PUSCH of the cell in the current subframe and the another cell which processes carrier aggregation with the cell in the current subframe. The processor can be connected with a storage that is configured to store information processed by the processor. For actions performed by the processor, reference may be made to the uplink transmission power determining method provided in the foregoing embodiment, which is not repeated herein. The processor may exist in the user equipment or base station and is configured to determine uplink transmission power.

An embodiment of the present invention also provides a chip, which is configured to determine uplink transmission power. The chip may include the foregoing processor.

Persons skilled in the art may clearly understand that, for the purpose of convenient and brief description, for a detailed working process of the system, apparatus, and unit described foregoing, reference may be made to corresponding process in the method embodiments, and details will not be described herein again.

In the embodiments provided in the present application, it should be understood that the disclosed system, apparatus, and method may be implemented in other modes. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, may be located in one position, or may be distributed on multiple network units. A part or all of the units may be selected according to an actual need to achieve the objectives of the solutions of the embodiments.

In addition, functional units in embodiments of the present invention may be integrated into one processing unit, or each of the units may exist alone physically, or two or more units are integrated into one unit. The integrated unit may be implemented through hardware, or may also be implemented in a form of hardware plus a software functional module.

The integrated unit implemented in the form of software functional unit may be stored in a computer readable storage medium. The software functional unit is stored in a storage medium, and contains several instructions used to instruct computer equipment (for example, a personal computer, a server, or network equipment) to perform the steps of the methods according to the embodiments of the present invention. The storage medium may be any medium that can store program codes, such as a U disk, a removable hard disk, a read-only memory (ROM, Read-Only memory), a random access memory (RAM, Random Access Memory), a magnetic disk, or an optical disk.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that they may still make modifications to the technical solution described in the foregoing embodiments or make equivalent substitutions to some technical features thereof, without departing from the scope of the technical solution of embodiments of the present invention.

**Claims**

1. A method for determining an uplink transmission power, comprising:

   determining (101), by a user equipment, an overlap between an uplink channel of a cell in a current subframe and an uplink channel of another cell in an adjacent subframe, the cell being in carrier aggregation with the another cell; and
   determining (102), by the user equipment, according to the determined overlap, transmission power of a physical uplink shared channel, PUSCH, of the cell in the current subframe and the another cell in the current subframe.

2. The method according to claim 1, wherein: the overlap determined by the user equipment comprises: the PUSCH of the cell in the current subframe is overlapped with a physical uplink control channel, PUCCH, of the another cell in the adjacent subframe, the another cell being in carrier aggregation with the cell.

3. The method according to claim 2, wherein: the determining (102), by the user equipment, according to the determined overlap, the transmission power of the PUSCH of the cell in the current subframe and the another cell in the current subframe, comprises:

determining, by the user equipment, according to formula (1), first transmission power of the PUSCH of the cell in the current subframe and the another cell which processes carrier aggregation with the cell in the current subframe, wherein:

$$\sum_c w(i) \cdot P_{PUSCH,c}(i) \leq \left( P_{CMAX}(i) - \max\left( P_{PUCCH}(i), \ P_{PUCCH}(t) \right) \right) \tag{1}$$

wherein $w(i)$ represents a weighting factor, whose value range is [0, 1]; c represents a cell; $\sum_c w(i) \cdot P_{PUSCH,c}(i)$ represents the first transmission power of the PUSCH of the cell in the current subframe and the another cell which processes carrier aggregation with the cell, in the current subframe; $P_{PUCCH}(i)$ represents first transmission power, which is obtained by the user equipment by performing uplink power control, of a PUCCH of the another cell which processes carrier aggregation with the cell in the current subframe; $P_{PUCCH}(t)$ represents first transmission power, which is obtained by the user equipment by performing uplink power control, of the PUCCH of the another cell which processes carrier aggregation with the cell in the adjacent subframe; and $P_{CMAX}(i)$ represents maximum allowable power of the current subframe.

4.  The method according to claim 2, wherein the PUSCH of the cell in the current subframe and the another cell which processes carrier aggregation with the cell in the current subframe comprises a PUSCH bearing uplink control signaling; and, the determining (102), by the user equipment, according to the determined overlap, the transmission power of the PUSCH of the cell in the current subframe and the another cell in the current subframe, comprises:

    determining, by the user equipment, according to formulas (2) and (3), second transmission power of the PUSCH of the cell in the current subframe and the another cell which processes carrier aggregation with the cell in the current subframe, wherein:

$$\sum_{c \neq j} w(i) \cdot P_{PUSCH,c}(i) \leq \left( P_{CMAX}(i) - P_{PUSCH,j}(i) - P_{PUCCH}(t) \right) \tag{2}$$

$$P_{PUSCH,j}(i) = \min\left\{ P_{PUSCH,j\_o}(i), \left( P_{CMAX}(i) - P_{PUCCH}(t) \right) \right\} \tag{3}$$

wherein $w(i)$ represents a weighting factor, whose value range is [0, 1]; c represents a cell; $\sum_{c \neq j} w(i) \cdot P_{PUSCH,c}(i)$ represents second transmission power of a PUSCH bearing no uplink control signaling of the cell in the current subframe and the another cell which processes carrier aggregation with the cell in the current subframe; $P_{PUCCH}(t)$ represents second transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; and $P_{PUSCH,j\_o}(i)$ represents first transmission power, which is obtained by the user equipment by performing uplink power control, of a PUSCH bearing uplink signaling in the current subframe; or
determining, by the user equipment, according to formula (4), third transmission power of the PUSCH of the cell in the current subframe and the another cell which processes carrier aggregation with the cell in the current subframe, wherein:

$$\sum_{c \neq j} w(i) \cdot P_{PUSCH,c}(i) + u(i) \cdot P_{PUSCH,j}(i) \leq \left( P_{CMAX}(i) - P_{PUCCH}(t) \right) \tag{4}$$

wherein $w(i)$ and $u(i)$ represent weighting factors, whose value range is [0, 1]; c represents a cell; $\sum_{c \neq j} w(i) \cdot P_{PUSCH,c}(i)$ represents third transmission power of a PUSCH bearing no uplink control signaling of the cell in the current subframe and the another cell which processes carrier aggregation with the cell in the current subframe; $P_{PUCCH}(t)$ represents third transmission power, which is obtained by the user equipment by performing uplink power control, of the PUCCH of the another cell which processes carrier aggregation with the cell in the adjacent subframe; $P_{CMAX}(i)$ *represents* maximum allowable power of the current subframe; and $P_{PUSCH,j}(i)$ represents first transmission power, which is obtained by the user equipment by performing uplink power control, of a PUSCH bearing uplink control signaling in the current subframe.

5. The method according to claim 2, wherein the PUSCH of the cell in the current subframe and the another cell which processes carrier aggregation with the cell in the current subframe comprises a PUSCH bearing uplink control signaling; the determining (102), by the user equipment, according to the determined overlap, the transmission power of the PUSCH of the cell in the current subframe and the another cell in the current subframe, comprises:

   determining, by the user equipment, according to formulas (5) and (6), fourth transmission power of the PUSCH of the cell in the current subframe and the another cell which processes carrier aggregation with the cell in the current subframe, wherein:

$$\sum_{c \neq j} w(i) \cdot P_{PUSCH,c}(i) \leq \left( P_{CMAX}(i) - P_{PUSCH,j}(i) - \max\left( P_{PUCCH}(i),\ P_{PUCCH}(t) \right) \right) \tag{5}$$

$$P_{PUSCH,j}(i) = \min\left\{ P_{PUSCH,j\_o}(i), \left( P_{CMAX}(i) - \max\left( P_{PUCCH}(i),\ P_{PUCCH}(t) \right) \right) \right\} \tag{6}$$

   wherein $w(i)$ represents a weighting factor, whose value range is [0, 1]; c represents a cell; $\sum_{c \neq j} w(i) \cdot P_{PUSCH,c}(i)$ represents fourth transmission power of a PUSCH bearing no uplink control signaling of the cell in the current subframe and the another cell which processes carrier aggregation with the cell in the current subframe; $P_{PUCCH}(i)$ represents second transmission power, which is obtained by the user equipment by performing uplink power control, of the PUCCH of the another cell which processes carrier aggregation with the cell in the current subframe; $P_{PUCCH}(t)$ represents fourth transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; and $P_{PUSCH,j\_o}(i)$ represents second transmission power, which is obtained by the user equipment by performing uplink power control, of a PUSCH bearing uplink signaling comprised in the current frame; or determining, by the user equipment, according to formula (7), fifth transmission power of the PUSCH of the cell in the current subframe and the another cell which processes carrier aggregation with the cell in the current subframe, wherein:

$$\sum_{c \neq j} w(i) \cdot P_{PUSCH,c}(i) + u(i) \cdot P_{PUSCH,j}(i) \leq \left( P_{CMAX}(i) - \max\left( P_{PUCCH}(i),\ P_{PUCCH}(t) \right) \right) \tag{7}$$

   wherein $w(i)$ and $u(i)$ represent weighting factors, whose value range is [0, 1]; c represents a cell; $\sum_{c \neq j} w(i) \cdot P_{PUSCH,c}(i)$ represents fifth transmission power of a PUSCH bearing no uplink control signaling of the cell in the current subframe and the another cell which processes carrier aggregation with the cell in the current subframe; $P_{PUCCH}(i)$ represents third transmission power, which is obtained by the user equipment by performing uplink power control, of the PUCCH of the another cell which processes carrier aggregation with the cell in the current subframe; $P_{PUCCH}(t)$ represents fifth transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; and $P_{PUSCH,j}(i)$ represents second transmission power, which is obtained by the user equipment by performing uplink power control, of a PUSCH bearing uplink control signaling in the current subframe.

6. The method according to claim 1, wherein the overlap determined by the user equipment comprises: the PUSCH of the cell in the current subframe, or a PUCCH of the cell in the current subframe, or at least one of the PUSCH and a PUCCH of the cell in the current subframe is overlapped with a PUSCH bearing uplink signaling in the another cell in the adjacent subframe, the another cell being in carrier aggregation with the cell.

7. The method according to claim 6, wherein the determining (102), by the user equipment, according to the determined overlap, the transmission power of the PUSCH of the cell in the current subframe and the another cell in the current subframe, comprises:

   determining, by the user equipment, according to formula (8), sixth transmission power of the PUSCH of the cell in the current subframe and the another cell which processes carrier aggregation with the cell in the current subframe, wherein:

$$\sum_c w(i) \cdot P_{PUSCH,c}(i) \le \left( P_{CMAX}(i) - P_{PUSCH,k}(t) - P_{PUCCH}(i) \right) \tag{8}$$

   wherein $w(i)$ represents a weighting factor, whose value range is [0, 1]; c represents a cell; $\sum_c w(i) \cdot P_{PUSCH,c}(i)$ represents the sixth transmission power of the PUSCH of the cell in the current subframe and the another cell which processes carrier aggregation with the cell in the current subframe; $P_{PUCCH}(i)$ represents fourth transmission power, which is obtained by the user equipment by performing uplink power control, of a PUCCH of the cell or the another cell which processes carrier aggregation with the cell in the current subframe; $P_{CMAX}(i)$ *represents* maximum allowable power of the current subframe; and $P_{PUSCH,k}(t)$ represents first transmission power, which is obtained by the user equipment by performing uplink power control, of a PUSCH bearing uplink control signaling of the cell in the adjacent subframe and the another cell which processes carrier aggregation with the cell in the adjacent subframe; or
   determining, by the user equipment, according to formula (9), seventh transmission power of the PUSCH of the cell in the current subframe and the another cell which processes carrier aggregation with the cell in the current subframe, wherein:

$$\sum_c w(i) \cdot P_{PUSCH,c}(i) + u(i) \cdot P_{PUSCH,k}(t) + v(i) \cdot P_{PUCCH}(i) \le P_{CMAX}(i) \tag{9}$$

   wherein $w(i)$, $u(i)$, and $v(i)$ represent weighting factors, whose value range is [0, 1]; c represents a cell; $\sum_c w(i) \cdot P_{PUSCH,c}(i)$ represents the seventh transmission power of the PUSCH of the cell in the current subframe and the another cell which processes carrier aggregation with the cell in the current subframe; $P_{PUCCH}(i)$ represents fifth transmission power, which is obtained by the user equipment by performing uplink power control, of a PUCCH of the cell or the another cell which processes carrier aggregation with the cell in the current subframe; $P_{CMAX}(i)$ represents maximum allowable power of the current subframe; and $P_{PUSCH,k}(t)$ represents second transmission power, which is obtained by the user equipment by performing uplink power control, of a PUSCH bearing uplink signaling of the cell in the adjacent subframe and the another cell which processes carrier aggregation with the cell in the adjacent subframe.

8. The method according to claim 6, wherein the PUSCH of the cell in the current subframe and the another cell which processes carrier aggregation with the cell in the current subframe comprises a PUSCH bearing uplink control signaling; and, the determining (102), by the user equipment, according to the determined overlap, the transmission power of the PUSCH of the cell in the current subframe and the another cell in the current subframe, comprises:

   determining, by the user equipment, according to formulas (10) and (11) or according to formulas (10) and (12), eighth transmission power of the PUSCH of the cell in the current subframe and the another cell which processes carrier aggregation with the cell in the current subframe, wherein:

$$\sum_{c \neq j} w(i) \cdot P_{PUSCH,c}(i) \leq \left( P_{CMAX}(i) - P_{PUSCH,j}(i) - P_{PUSCH,k}(t) \right)$$

(10)

$$P_{PUSCH,j}(i) = \min \left\{ P_{PUSCH,j\_o}(i), \left( P_{CMAX}(i) - P_{PUSCH,k\_o}(i-1) \right) \right\}$$

(11)

$$P_{PUSCH,j}(i) = \min \left\{ P_{PUSCH,j\_o}(i), \left( P_{CMAX}(i) - P_{PUSCH,k\_o}(i+1) \right) \right\}$$

(12)

wherein $w(i)$ represents a weighting factor, whose value range is [0, 1]; c represents a cell; $\sum_{c \neq j} w(i) \cdot P_{PUSCH,c}(i)$ represents eighth transmission power of a PUSCH bearing no uplink control signaling of the cell in the current subframe and the another cell which processes carrier aggregation with the cell in the current subframe; $P_{CMAX}(i)$ represents maximum allowable power of the current subframe; $P_{PUSCH,k}(t)$ represents third transmission power, which is obtained by the user equipment by performing uplink power control, of a PUSCH bearing uplink signaling of the cell in the adjacent subframe and the another cell which processes carrier aggregation with the cell in the adjacent subframe,; $P_{PUSCH,j-o}(i)$ represents third transmission power, which is obtained by the user equipment by performing uplink power control, of a PUSCH bearing uplink signaling comprised in the current frame; $P_{PUSCH,k\_o}(i-1)$ represents first transmission power of a PUSCH bearing uplink signaling of the another cell which processes carrier aggregation with the cell in an adjacent subframe before the current subframe; $P_{PUSCH,k\_o}(i+1)$ represents first transmission power of a PUSCH bearing uplink signaling of the another cell which processes carrier aggregation with the cell in an adjacent subframe after the current subframe; or

determining, by the user equipment, according to formula (13), ninth transmission power of the PUSCH of the cell in the current subframe and the another cell which processes carrier aggregation with the cell in the current subframe, wherein:

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i)$$

(13)

wherein $w(i)$, $u(i)$, and $v(i)$ represent weighting factors, whose value range is [0, 1]; c represents a cell; $\sum_{c \neq j} w(i) \cdot P_{PUSCH,c}(i)$ represents ninth transmission power of a PUSCH bearing no uplink control signaling of the cell in the current subframe and the another cell which processes carrier aggregation with the cell in the current subframe; $P_{CMAX}(i)$ represents maximum allowable power of the current subframe; $P_{PUSCH,k}(t)$ represents the fourth transmission power, which is obtained by the user equipment by performing uplink power control, of a PUSCH bearing uplink signaling of the cell in the adjacent subframe and the another cell which processes carrier aggregation with the cell in the adjacent subframe; $P_{PUSCH,j}(i)$ represents third transmission power, which is obtained by the user equipment by performing uplink power control, of a PUSCH bearing uplink control signaling in the current subframe.

9. The method according to claim 6, wherein the PUSCH of the cell in the current subframe and the another cell which processes carrier aggregation with the cell in the current subframe comprises a PUSCH bearing uplink signaling; the determining (102), by the user equipment, according to the determined overlap, the transmission power of the PUSCH of the cell in the current subframe and the another cell in the current subframe, comprises:

determining, by the user equipment, according to formulas (14) and (15) or according to formulas (14) and (16), tenth transmission power of the PUSCH of the cell in the current subframe and the another cell which processes carrier aggregation with the cell in the current subframe, wherein:

$$\sum_{c \neq j} w(i) \cdot P_{PUSCH,c}(i) \leq \left( P_{CMAX}(i) - P_{PUSCH,j}(i) - P_{PUSCH,k}(t) - P_{PUCCH}(i) \right) \tag{14}$$

$$P_{PUSCH,j}(i) = \min \left\{ P_{PUSCH,j\_o}(i), \left( P_{CMAX}(i) - P_{PUCCH}(i) - P_{PUSCH,k\_o}(i-1) \right) \right\} \tag{15}$$

$$P_{PUSCH,j}(i) = \min \left\{ P_{PUSCH,j\_o}(i), \left( P_{CMAX}(i) - P_{PUCCH}(i) - P_{PUSCH,k\_o}(i+1) \right) \right\} \tag{16}$$

wherein $w(i)$ represents a weighting factor, whose value range is [0, 1]; c represents a cell; $\sum_{c \neq j} w(i) \cdot P_{PUSCH,c}(i)$ represents the tenth transmission power of a PUSCH bearing no uplink control signaling of the cell in the current subframe and the another cell which processes carrier aggregation with the cell in the current subframe; $P_{PUCCH}(i)$ represents sixth transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; $P_{PUSCH,k}(t)$ represents fifth transmission power, which is obtained by the user equipment by performing uplink power control, of a PUSCH bearing uplink signaling of the cell in the adjacent subframe and the another cell which processes carrier aggregation with the cell in the adjacent subframe; $P_{PUSCH,i\_o}(i)$ represents fourth transmission power, which is obtained by the user equipment by performing uplink power control, of the PUSCH bearing uplink signaling comprised in the current frame; $P_{PUSCH,k}(i-1)$ represents second transmission power of a PUSCH bearing uplink signaling of the another cell which processes carrier aggregation with the cell in an adjacent subframe before the current subframe; $P_{PUSCH,k\_o}(i+1)$ represents second transmission power of a PUSCH bearing uplink signaling of the another cell which processes carrier aggregation with the cell in an adjacent subframe after the current subframe; or

determining, by the user equipment, according to formula (17), eleventh transmission power of the PUSCH of the cell in the current subframe and the another cell which processes carrier aggregation with the cell in the current subframe, wherein:

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i) - P_{PUCCH}(i) \tag{17}$$

wherein $w(i)$, $u(i)$, and $v(i)$ represent weighting factors, whose value range is [0, 1]; c represents a cell; $\sum_{c \neq j} w(i) \cdot P_{PUSCH,c}(i)$ represents eleventh transmission power of a PUSCH bearing no uplink control signaling of the cell in the current subframe and the another cell which processes carrier aggregation with the cell in the current subframe; $P_{PUCCH}(i)$ represents seventh transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; $P_{PUSCH,j}(i)$ represents fourth transmission power, which is obtained by the user equipment by performing uplink power control, of the PUSCH bearing uplink control signaling in the current subframe; $P_{PUSCH,k}(t)$ represents sixth transmission power, which is obtained by the user equipment by performing uplink power control, of a PUSCH bearing uplink signaling of the cell in the adjacent subframe and the another cell which processes carrier aggregation with the cell in the adjacent subframe.

10. A user equipment, comprising:

an overlap determining unit (21), configured to determine an overlap between an uplink channel of a cell in a current subframe and an uplink channel of another cell in an adjacent subframe, the cell being in carrier aggregation with the another cell; and

a power determining unit (22), configured to determine, according to the overlap determined by the overlap determining unit (21), transmission power of a physical uplink shared channel, PUSCH, of the cell in the current subframe and the another cell in the current subframe.

11. The user equipment according to claim 10, wherein: the overlap determined by the overlap determining unit (21) comprises: the PUSCH of the cell in the current subframe is overlapped with a physical uplink control channel, PUCCH, of the another cell in the adjacent subframe, the another cell being in carrier aggregation with the cell.

12. The user equipment according to claim 11, wherein the power determining unit (22) is specifically configured to:

according to formula (1), determine first transmission power of the PUSCH of the cell in the current subframe and the another cell which processes carrier aggregation with the cell in the current subframe, wherein:

$$\sum_c w(i) \cdot P_{PUSCH,c}(i) \le \left( P_{CMAX}(i) - \max\left( P_{PUCCH}(i), \ P_{PUCCH}(t) \right) \right) \tag{1}$$

wherein $w(i)$ represents a weighting factor, whose value range is [0, 1]; c represents a cell; $\sum_c w(i) \cdot P_{PUSCH,c}(i)$ represents the first transmission power of the PUSCH of the cell in the current subframe and the another cell which processes carrier aggregation with the cell in the current subframe; $P_{PUCCH}(i)$ represents first transmission power, which is obtained by the user equipment by performing uplink power control, of a PUCCH of the another cell which processes carrier aggregation with the cell in the current subframe; $P_{PUCCH}(t)$ represents first transmission power, which is obtained by the user equipment by performing uplink power control, of the PUCCH of the another cell which processes carrier aggregation with the cell in the adjacent subframe; and $P_{CMAX}(i)$ represents maximum allowable power of the current subframe.

13. The user equipment according to claim 11, wherein: the PUSCH of the cell in the current subframe and the another cell which processes carrier aggregation with the cell in the current subframe comprises a PUSCH bearing uplink control signaling; and, the power determining unit (22) is specifically configured to:

according to formula (2) and (3), determine second transmission power of the PUSCH of the cell in the current subframe and the another cell which processes carrier aggregation with the cell in the current subframe, wherein:

$$\sum_{c \ne j} w(i) \cdot P_{PUSCH,c}(i) \le \left( P_{CMAX}(i) - P_{PUSCH,j}(i) - P_{PUCCH}(t) \right) \tag{2}$$

$$P_{PUSCH,j}(i) = \min\left\{ P_{PUSCH,j\_o}(i), \left( P_{CMAX}(i) - P_{PUCCH}(t) \right) \right\} \tag{3}$$

wherein $w(i)$ represents a weighting factor, whose value range is [0, 1]; c represents a cell; $\sum_{c \ne j} w(i) \cdot P_{PUSCH,c}(i)$ represents second transmission power of a PUSCH bearing no uplink control signaling of the cell in the current subframe and the another cell which processes carrier aggregation with the cell in the current subframe; $P_{PUCCH}(t)$ represents second transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; $P_{PUSCH,j\_o}(i)$ represents first transmission power, which is obtained by the user equipment by performing uplink power control, of a PUSCH bearing uplink signaling in the current frame; or
according to formula (4), determine third transmission power of the PUSCH of the cell in the current subframe and the another cell which processes carrier aggregation with the cell in the current subframe, wherein:

$$\sum_{c \neq j} w(i) \cdot P_{PUSCH,c}(i) + u(i) \cdot P_{PUSCH,j}(i) \le \left( P_{CMAX}(i) - P_{PUCCH}(t) \right)$$

(4)

wherein $w(i)$ and $u(i)$ represent weighting factors, whose value range is [0, 1]; c represents a cell; $\sum_{c \neq j} w(i) \cdot P_{PUSCH,c}(i)$ represents third transmission power of a PUSCH bearing no uplink control signaling of the cell in the current subframe and the another cell which processes carrier aggregation with the cell in the current subframe; $P_{PUCCH}(t)$ represents third transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; and $P_{PUSCH,j}(i)$ represents first transmission power, which is obtained by the user equipment by performing uplink power control, of a PUSCH bearing uplink control signaling in the current subframe.

14. The user equipment according to claim 11, wherein: the PUSCH of the cell in the current subframe and the another cell which processes carrier aggregation with the cell in the current subframe comprises a PUSCH bearing uplink control signaling; and the power determining unit (22) is specifically configured to:

according to formula (5) and (6), determine fourth transmission power of the PUSCH of the cell in the current subframe and the another cell which processes carrier aggregation with the cell in the current subframe, wherein:

$$\sum_{c \neq j} w(i) \cdot P_{PUSCH,c}(i) \le \left( P_{CMAX}(i) - P_{PUSCH,j}(i) - \max\left( P_{PUCCH}(i), \ P_{PUCCH}(t) \right) \right)$$

(5)

$$P_{PUSCH,j}(i) = \min\left\{ P_{PUSCH,j\_o}(i), \left( P_{CMAX}(i) - \max\left( P_{PUCCH}(i), \ P_{PUCCH}(t) \right) \right) \right\}$$

(6)

wherein $w(i)$ represents a weighting factor, whose value range is [0, 1]; c represents a cell; $\sum_{c \neq j} w(i) \cdot P_{PUSCH,c}(i)$ represents fourth transmission power of a PUSCH bearing no uplink control signaling of the cell in the current subframe and the another cell which processes carrier aggregation with the cell in the current subframe; $P_{PUCCH}(i)$ represents second transmission power, which is obtained by the user equipment by performing uplink power control, of the PUCCH of the another cell which processes carrier aggregation with the cell in the current subframe; $P_{PUCCH}(t)$ represents fourth transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; $P_{PUSCH,j\_o}(i)$ represents second transmission power, which is obtained by the user equipment by performing uplink power control, of a PUSCH bearing uplink signaling comprised in the current frame; or
according to formula (7), determine fifth transmission power of the PUSCH of the cell in the current subframe and the another cell which processes carrier aggregation with the cell in the current subframe, wherein:

$$\sum_{c \neq j} w(i) \cdot P_{PUSCH,c}(i) + u(i) \cdot P_{PUSCH,j}(i) \le \left( P_{CMAX}(i) - \max\left( P_{PUCCH}(i), \ P_{PUCCH}(t) \right) \right)$$

(7)

wherein $w(i)$ and $u(i)$ represent weighting factors, whose value range is [0, 1]; c represents a cell; $\sum_{c \neq j} w(i) \cdot P_{PUSCH,c}(i)$ represents fifth transmission power of a PUSCH bearing no uplink control signaling of the cell in the current subframe and the another cell which processes carrier aggregation with the cell in the current subframe; $P_{PUCCH}(i)$ represents third transmission power, which is obtained by the user equipment by performing uplink power control, of the PUCCH of the another cell which processes carrier aggregation with the cell in the current subframe; $P_{PUCCH}(t)$ represents fifth transmission power, which is obtained by the user equipment by performing uplink power control, of the PUCCH of the another cell which processes carrier aggregation with the cell in the adjacent subframe; $P_{CMAX}(i)$ represents maximum allowable power of the current subframe; and $P_{PUSCH,j}(i)$ represents second transmission power, which is obtained by the user equipment by performing uplink power control, of a PUSCH bearing uplink control signaling in the current subframe.

15. The user equipment according to claim 10, wherein the overlap determined by the overlap determining unit (21) comprises: the PUSCH of the cell in the current subframe, or a PUCCH of the cell in the current subframe, or at least one of a PUSCH and the PUCCH of the cell in the current subframe is overlapped with a PUSCH bearing uplink signaling in the another cell in the adjacent subframe, the another cell being in carrier aggregation with the cell.

16. The user equipment according to claim 15, wherein the power determining unit (22) is specifically configured to:

according to formula (8), determine sixth transmission power of the PUSCH of the cell in the current subframe and the another cell which processes carrier aggregation with the cell in the current subframe, wherein:

$$\sum_c w(i) \cdot P_{PUSCH,c}(i) \le \left( P_{CMAX}(i) - P_{PUSCH,k}(t) - P_{PUCCH}(i) \right) \tag{8}$$

wherein $w(i)$ represents a weighting factor, whose value range is [0, 1]; c represents a cell; $\sum_c w(i) \cdot P_{PUSCH,c}(i)$ represents the sixth transmission power of the PUSCH of the cell in the current subframe and the another cell which processes carrier aggregation with the cell in the current subframe; $P_{PUCCH}(i)$ represents fourth transmission power, which is obtained by the user equipment by performing uplink power control, of a PUCCH of the cell or the another cell which processes carrier aggregation with the cell in the current subframe; $P_{CMAX}(i)$ represents maximum allowable power of the current subframe; $P_{PUSCH,k}(t)$ represents first transmission power, which is obtained by the user equipment by performing uplink power control, of a PUSCH bearing uplink control signaling of the cell in the adjacent subframe and the another cell which processes carrier aggregation with the cell in the adjacent subframe; or
according to formula (9), determine seventh transmission power of the PUSCH of the cell in the current subframe and the another cell which processes carrier aggregation with the cell in the current subframe, wherein:

$$\sum_c w(i) \cdot P_{PUSCH,c}(i) + u(i) \cdot P_{PUSCH,k}(t) + v(i) \cdot P_{PUCCH}(i) \le P_{CMAX}(i) \tag{9}$$

wherein $w(i)$, $u(i)$, $u(i)$, and $v(i)$ represent weighting factors, whose value range is [0, 1]; c represents a cell; $\sum_c w(i) \cdot P_{PUSCH,c}(i)$ represents seventh transmission power of the PUSCH of the cell in the current subframe and the another cell which processes carrier aggregation with the cell in the current subframe; $P_{PUCCH}(i)$ represents fifth transmission power, which is obtained by the user equipment by performing uplink power control, of a PUCCH of the cell or the another cell which processes carrier aggregation with the cell in the current subframe; $P_{CMAX}(i)$ represents maximum allowable power of the current subframe; and $P_{PUSCH,k}(t)$ represents second transmission power, which is obtained by the user equipment by performing uplink power control, of a PUSCH bearing uplink signaling of the cell in the adjacent subframe and the another cell which processes carrier aggregation with the cell in the adjacent subframe.

17. The user equipment according to claim 15, wherein the PUSCH of the cell in the current subframe and the another cell which processes carrier aggregation with the cell in the current subframe comprises a PUSCH bearing uplink control signaling; and, the power determining unit (22) is specifically configured to:

according to formulas (10) and (11) or according to formulas (10) and (12), determine eighth transmission power of the PUSCH of the cell in the current subframe and the another cell which processes carrier aggregation with the cell in the current subframe, wherein:

$$\sum_{c \neq j} w(i) \cdot P_{PUSCH,c}(i) \leq \left( P_{CMAX}(i) - P_{PUSCH,j}(i) - P_{PUSCH,k}(t) \right) \tag{10}$$

$$P_{PUSCH,j}(i) = \min \left\{ P_{PUSCH,j\_o}(i), \left( P_{CMAX}(i) - P_{PUSCH,k\_o}(i-1) \right) \right\} \tag{11}$$

$$P_{PUSCH,j}(i) = \min \left\{ P_{PUSCH,j\_o}(i), \left( P_{CMAX}(i) - P_{PUSCH,k\_o}(i+1) \right) \right\} \tag{12}$$

wherein $w(i)$ represents a weighting factor, whose value range is [0, 1]; c represents a cell; $\sum_{c \neq j} w(i) \cdot P_{PUSCH,c}(i)$ represents eighth transmission power of a PUSCH bearing no uplink control signaling of the cell in the current subframe and the another cell which processes carrier aggregation with the cell in the current subframe; $P_{CMAX}(i)$ represents maximum allowable power of the current subframe; $P_{PUSCH,k}(t)$ represents third transmission power, which is obtained by the user equipment by performing uplink power control, of a PUSCH bearing uplink signaling of the cell in the adjacent subframe and the another cell which processes carrier aggregation with the cell in the adjacent subframe; $P_{PUSCH,j\_o}(i)$ represents third transmission power, which is obtained by the user equipment by performing uplink power control, of a PUSCH bearing uplink signaling comprised in the current frame; $P_{PUSCH,k\_o}(i-1)$ represents first transmission power of a PUSCH bearing uplink signaling of the another cell which processes carrier aggregation with the cell in an adjacent subframe before the current subframe; and $P_{PUSCH,k\_o}(i+1)$ represents first transmission power of a PUSCH bearing uplink signaling of the another cell which processes carrier aggregation with the cell in an adjacent subframe after the current subframe; or

according to formula (13), determine ninth transmission power of the PUSCH of the cell in the current subframe and the another cell which processes carrier aggregation with the cell in the current subframe, wherein:

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i) \tag{13}$$

wherein $w(i)$, $u(i)$ and $v(i)$ represent weighting factors, whose value range is [0, 1]; c represents a cell; $\sum_{c \neq j} w(i) \cdot P_{PUSCH,c}(i)$ represents ninth transmission power of a PUSCH bearing no uplink control signaling of the cell in the current subframe and the another cell which processes carrier aggregation with the cell in the current subframe; $P_{CMAX}(i)$ represents maximum allowable power of the current subframe; $P_{PUSCH,k}(t)$ represents the fourth transmission power, which is obtained by the user equipment by performing uplink power control, of a PUSCH bearing uplink signaling of the cell in the adjacent subframe and the another cell which processes carrier aggregation with the cell in the adjacent subframe; and $P_{PUSCH,j}(i)$ represents third transmission power, which is obtained by the user equipment by performing uplink power control, of a PUSCH bearing uplink control signaling in the current subframe.

18. The user equipment according to claim 15, wherein: the PUSCH of the cell in the current subframe and the another cell which processes carrier aggregation with the cell in the current subframe comprises a PUSCH bearing uplink signaling; and the power determining unit (22) is specifically configured to:

according to formulas (14) and (15) or according to formulas (14) and (16), determine tenth transmission power of the PUSCH of the cell in the current subframe and the another cell which processes carrier aggregation with the cell in the current subframe, wherein:

$$\sum_{c \neq j} w(i) \cdot P_{PUSCH,c}(i) \leq \left( P_{CMAX}(i) - P_{PUSCH,j}(i) - P_{PUSCH,k}(t) - P_{PUCCH}(i) \right) \tag{14}$$

$$P_{PUSCH,j}(i) = \min\left\{P_{PUSCH,j\_o}(i), \left(P_{CMAX}(i) - P_{PUCCH}(i) - P_{PUSCH,k\_o}(i-1)\right)\right\} \tag{15}$$

$$P_{PUSCH,j}(i) = \min\left\{P_{PUSCH,j\_o}(i), \left(P_{CMAX}(i) - P_{PUCCH}(i) - P_{PUSCH,k\_o}(i+1)\right)\right\} \tag{16}$$

wherein $w(i)$ represents a weighting factor, whose value range is [0, 1]; c represents a cell; $\sum_{c\neq j} w(i)\cdot P_{PUSCH,c}(i)$ represents the tenth transmission power of a PUSCH bearing no uplink control signaling of the cell in the current subframe and the another cell which processes carrier aggregation with the cell in the current subframe; $P_{PUCCH}(i)$ represents sixth transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; $P_{PUSCH,k}(t)$ represents fifth transmission power, which is obtained by the user equipment by performing uplink power control, of a PUSCH bearing uplink signaling of the cell in the adjacent subframe and the another cell which processes carrier aggregation with the cell in the adjacent subframe; $P_{PUSCH,j\_o}(i)$ represents fourth transmission power, which is obtained by the user equipment by performing uplink power control, of the PUSCH bearing uplink signaling in the current frame; $P_{PUSCH,k\_o}(i-1)$ represents second transmission power of a PUSCH bearing uplink signaling of the another cell which processes carrier aggregation with the cell in an adjacent subframe before the current subframe; $P_{PUSCH,k\_o}(i+1)$ represents second transmission power of a PUSCH bearing uplink signaling of the another cell which processes carrier aggregation with the cell in an adjacent subframe after the current subframe; or
according to formula (17), determine eleventh transmission power of the PUSCH of the cell in the current subframe and the another cell which processes carrier aggregation with the cell in the current subframe, wherein:

$$\sum_{c\neq j} w(i)\cdot P_{PUSCH,c}(i) + u(i)\cdot P_{PUSCH,j}(i) + v(i)\cdot P_{PUSCH,k}(t) \leq P_{CMAX}(i) - P_{PUCCH}(i) \tag{17}$$

wherein $w(i)$, $u(i)$, and $v(i)$ represent weighting factors, whose value range is [0, 1]; c represents a cell; $\sum_{c\neq j} w(i)\cdot P_{PUSCH,c}(i)$ represents eleventh transmission power of a PUSCH bearing no uplink control signaling of the cell in the current subframe and the another cell which processes carrier aggregation with the cell in the current subframe; $P_{PUCCH}(i)$ represents seventh transmission power, which is obtained by the user equipment by performing uplink power control, of the PUCCH of the cell or the another cell which processes carrier aggregation with the cell in the current subframe; $P_{CMAX}(i)$ represents maximum allowable power of the current subframe; $P_{PUSCH,j}(i)$ represents fourth transmission power, which is obtained by the user equipment by performing uplink power control, of the PUSCH bearing uplink control signaling in the current subframe; $P_{PUSCH,k}(t)$ represents sixth transmission power, which is obtained by the user equipment by performing uplink power control, of a PUSCH bearing uplink signaling of the cell in the adjacent subframe and the another cell which processes carrier aggregation with the cell in the adjacent subframe.

**Patentansprüche**

1. Verfahren zum Bestimmen einer Aufwärtsstrecken-Sendeleistung, umfassend:

Bestimmen (101) einer Überlappung zwischen einem Aufwärtsstreckenkanal einer Zelle in einem aktuellen Subrahmen und einem Aufwärtsstreckenkanal einer anderen Zelle in einem angrenzenden Subrahmen durch ein Benutzergerät, wobei sich die Zelle in Trägeraggregation mit der anderen Zelle befindet; und
Bestimmen (102) der Sendeleistung eines "Physical Uplink Shared Channel", PUSCH, der Zelle in dem aktuellen Subrahmen und der anderen Zelle in dem aktuellen Subrahmen durch das Benutzergerät gemäß der bestimmten Überlappung.

2. Verfahren nach Anspruch 1, wobei die durch das Benutzergerät bestimmte Überlappung Folgendes umfasst: der PUSCH der Zelle in dem aktuellen Subrahmen ist mit einem "Physical Uplink Control Channel", PUCCH, der anderen Zelle in dem angrenzenden Subrahmen überlappt, wobei sich die andere Zelle in Trägeraggregation mit der Zelle befindet.

3. Verfahren nach Anspruch 2, wobei das Bestimmen (102) der Sendeleistung des PUSCH der Zelle in dem aktuellen Subrahmen und der anderen Zelle in dem aktuellen Subrahmen durch das Benutzergerät gemäß der bestimmten Überlappung Folgendes umfasst:

Bestimmen erster Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß Formel (1), wobei:

$$\sum_c w(i) \cdot P_{PUSCH,c}(i) \leq \left( P_{CMAX}(i) - \max\left( P_{PUCCH}(i), \quad P_{PUCCH}(t) \right) \right) \tag{1}$$

wobei w(i) einen Gewichtungsfaktor repräsentiert, dessen Wertebereich [0, 1] ist; c eine Zelle repräsentiert; $\sum_c w(i) \cdot P_{PUSCH,c}(i)$ die erste Sendeleistung des PUSCH der Zelle in dem aktuellen Subrahmen und der anderen Zelle, die Trägeraggregation mit der Zelle, in dem aktuellen Subrahmen verarbeitet, repräsentiert; $P_{PUCCH}(i)$ die erste Sendeleistung, die durch das Benutzergerät durch Durchführen von Aufwärtsstrecken-Leistungsregelung erhalten wird, eines PUCCH der anderen Zelle, die Trägeraggregation mit der Zelle in dem aktuellen Subrahmen verarbeitet, repräsentiert; $P_{PUCCH}(t)$ erste Sendeleistung, die durch das Benutzergerät durch Durchführen von Aufwärtsstrecken-Leistungsregelung erhalten wird, des PUCCH der anderen Zelle, die Trägeraggregation mit der Zelle in dem angrenzenden Subrahmen verarbeitet, repräsentiert; und $P_{CMAX}(i)$ die maximal zulässige Leistung des aktuellen Subrahmens repräsentiert.

4. Verfahren nach Anspruch 2, wobei der PUSCH der Zelle in dem aktuellen Subrahmen und der anderen Zelle, die Trägeraggregation mit der Zelle in dem aktuellen Subrahmen verarbeitet, einen PUSCH umfasst, der Aufwärtsstrecken-Steuersignalisierung trägt; und das Bestimmen (102) der Sendeleistung des PUSCH der Zelle in dem aktuellen Subrahmen und der anderen Zelle in dem aktuellen Subrahmen durch das Benutzergerät gemäß der bestimmten Überlappung Folgendes umfasst:

Bestimmen zweiter Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß den Formeln (2) und (3), wobei:

$$\sum_{c \neq j} w(i) \cdot P_{PUSCH,c}(i) \leq \left( P_{CMAX}(i) - P_{PUSCH,j}(i) - P_{PUCCH}(t) \right) \tag{2}$$

$$P_{PUSCH,j}(i) = \min\left\{ P_{PUSCH,j\_o}(i), \left( P_{CMAX}(i) - P_{PUCCH}(t) \right) \right\} \tag{3}$$

wobei w(i) einen Gewichtungsfaktor repräsentiert, dessen Wertebereich [0, 1] ist; c eine Zelle repräsentiert; $\sum_{c \neq j} w(i) \cdot P_{PUSCH,c}(i)$ zweite Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(t)$ zweite Sendeleistung, die durch das Benutzergerät durch Durchführen von Aufwärtsstrecken-Leistungsregelung erhalten wird, des PUCCH der anderen Zelle, die Trägeraggregation mit der Zelle in dem angrenzenden Subrahmen verarbeitet, repräsentiert; $P_{CMAX}(t)$ maximal zulässige Leistung des aktuellen Subrahmens repräsentiert; und $P_{PUSCH,j\_o}(i)$ erste Sendeleistung, die durch das Benutzergerät durch Durchführen von Aufwärtsstrecken-Leistungsregelung erhalten wird, eines Aufwärtsstrecken-Signalisierung in dem aktuellen Subrahmen tragenden PUSCH repräsentiert; oder

31

Bestimmen dritter Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß Formel (4), wobei:

$$\sum_{c \neq j} w(i) \cdot P_{PUSCH,c}(i) + u(i) \cdot P_{PUSCH,j}(i) \leq \left( P_{CMAX}(i) - P_{PUCCH}(t) \right) \tag{4}$$

wobei $w(i)$ und $u(i)$ Gewichtungsfaktoren repräsentieren, deren Wertebereich [0, 1] ist; c eine Zelle repräsentiert;

$\sum_{c \neq j} w(i) \cdot P_{PUSCH,c}(i)$ dritte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(t)$ dritte Sendeleistung, die durch das Benutzergerät durch Durchführen von Aufwärtsstrecken-Leistungsregelung erhalten wird, des PUCCH der anderen Zelle, die Trägeraggregation mit der Zelle in dem angrenzenden Subrahmen verarbeitet, repräsentiert; $P_{CMAX}(i)$ maximal zulässige Leistung des aktuellen Subrahmens repräsentiert; und $P_{PUSCH,j}(i)$ erste Sendeleistung, die durch das Benutzergerät durch Durchführen von Aufwärtsstrecken-Leistungsregelung erhalten wird, eines Aufwärtsstrecken-Steuersignalisierung in dem aktuellen Subrahmen tragenden PUSCH repräsentiert.

5. Verfahren nach Anspruch 2, wobei der PUSCH der Zelle in dem aktuellen Subrahmen und der anderen Zelle, die Trägeraggregation mit der Zelle in dem aktuellen Subrahmen verarbeitet, einen PUSCH umfasst, der Aufwärtsstrecken-Steuersignalisierung trägt; und das Bestimmen (102) der Sendeleistung des PUSCH der Zelle in dem aktuellen Subrahmen und der anderen Zelle in dem aktuellen Subrahmen durch das Benutzergerät gemäß der bestimmten Überlappung Folgendes umfasst:

Bestimmen vierter Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß den Formeln (5) und (6), wobei:

$$\sum_{c \neq j} w(i) \cdot P_{PUSCH,c}(i) \leq \left( P_{CMAX}(i) - P_{PUSCH,j}(i) - \max\left( P_{PUCCH}(i), \ P_{PUCCH}(t) \right) \right) \tag{5}$$

$$P_{PUSCH,j}(i) = \min\left\{ P_{PUSCH,j\_o}(i), \left( P_{CMAX}(i) - \max\left( P_{PUCCH}(i), \ P_{PUCCH}(t) \right) \right) \right\} \tag{6}$$

wobei $w(i)$ einen Gewichtungsfaktor repräsentiert, dessen Wertebereich [0, 1] ist; c eine Zelle repräsentiert;

$\sum_{c \neq j} w(i) \cdot P_{PUSCH,c}(i)$ vierte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(i)$ zweite Sendeleistung, die durch das Benutzergerät durch Durchführen von Aufwärtsstrecken-Leistungsregelung erhalten wird, des PUCCH der anderen Zelle, die Trägeraggregation mit der Zelle in dem aktuellen Subrahmen verarbeitet, repräsentiert; $P_{PUCCH}(t)$ vierte Sendeleistung, die durch das Benutzergerät durch Durchführen von Aufwärtsstrecken-Leistungsregelung erhalten wird, des PUCCH der anderen Zelle, die Trägeraggregation mit der Zelle in dem angrenzenden Subrahmen verarbeitet, repräsentiert; $P_{CMAX}(i)$ maximal zulässige Leistung des aktuellen Subrahmens repräsentiert; und $P_{PUSCH,j\_o}(i)$ zweite Sendeleistung, die durch das Benutzergerät durch Durchführen von Aufwärtsstrecken-Leistungsregelung erhalten wird, eines in dem aktuellen Rahmen enthaltene Aufwärtsstreckensignalisierung tragenden PUSCH repräsentiert; oder

Bestimmen fünfter Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß Formel (7), wobei:

32

$$\sum_{c \neq j} w(i) \cdot P_{PUSCH,c}(i) + u(i) \cdot P_{PUSCH,j}(i) \leq \left( P_{CMAX}(i) - \max \left( P_{PUCCH}(i), \ P_{PUCCH}(t) \right) \right) \tag{7}$$

wobei w(i) und *u(i)* Gewichtungsfaktoren repräsentieren, deren Wertebereich [0, 1] ist; *c* eine Zelle repräsentiert; $\sum_{c \neq j} w(i) \cdot P_{PUSCH,c}(i)$ fünfte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(i)$ dritte Sendeleistung, die durch das Benutzergerät durch Durchführen von Aufwärtsstrecken-Leistungsregelung erhalten wird, des PUCCH der anderen Zelle, die Trägeraggregation mit der Zelle in dem aktuellen Subrahmen verarbeitet, repräsentiert; $P_{PUCCH}(t)$ fünfte Sendeleistung, die durch das Benutzergerät durch Durchführen von Aufwärtsstrecken-Leistungsregelung erhalten wird, des PUCCH der anderen Zelle, die Trägeraggregation mit der Zelle in dem angrenzenden Subrahmen verarbeitet, repräsentiert; $P_{CMAX}(i)$ maximal zulässige Leistung des aktuellen Subrahmens repräsentiert; und $P_{PUSCH,j}(i)$ zweite Sendeleistung, die durch das Benutzergerät durch Durchführen von Aufwärtsstrecken-Leistungsregelung erhalten wird, eines Aufwärtsstrecken-Steuersignalisierung in dem aktuellen Subrahmen tragenden PUSCH repräsentiert.

6. Verfahren nach Anspruch 1, wobei die durch das Benutzergerät bestimmte Überlappung Folgendes umfasst: der PUSCH der Zelle in dem aktuellen Subrahmen oder ein PUCCH der Zelle in dem aktuellen Subrahmen oder der PUSCH und/oder ein PUCCH der Zelle in dem aktuellen Subrahmen ist mit einem PUSCH überlappt, der Aufwärtsstreckensignalisierung in der anderen Zelle in dem angrenzenden Subrahmen trägt, wobei sich die andere Zelle in Trägeraggregation mit der Zelle befindet.

7. Verfahren nach Anspruch 6, wobei das Bestimmen (102) der Sendeleistung des PUSCH der Zelle in dem aktuellen Subrahmen und der anderen Zelle in dem aktuellen Subrahmen durch das Benutzergerät gemäß der bestimmten Überlappung Folgendes umfasst:

Bestimmen sechster Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß Formel (8), wobei:

$$\sum_{c} w(i) \cdot P_{PUSCH,c}(i) \leq \left( P_{CMAX}(i) - P_{PUSCH,k}(t) - P_{PUCCH}(i) \right) \tag{8}$$

wobei w(i) einen Gewichtungsfaktor repräsentiert, dessen Wertebereich [0, 1] ist; c eine Zelle repräsentiert; $\sum_{c} w(i) \cdot P_{PUSCH,c}(i)$ sechste Sendeleistung des PUSCH der Zelle im aktuellen Subrahmen und der anderen Zelle, die Trägeraggregation mit der Zelle in dem aktuellen Subrahmen verarbeitet, repräsentiert; $P_{PUCCH}(i)$ vierte Sendeleistung, die durch das Benutzergerät durch Durchführen von Aufwärtsstrecken-Leistungsregelung erhalten wird, eines PUCCH der Zelle oder der anderen Zelle, die Trägeraggregation mit der Zelle in dem aktuellen Subrahmen verarbeitet, repräsentiert; $P_{CMAX}(i)$ maximal zulässige Leistung des aktuellen Subrahmens repräsentiert; und $P_{PUSCH,k}(t)$ erste Sendeleistung, die durch das Benutzergerät durch Durchführen von Aufwärtsstrecken-Leistungsregelung erhalten wird, eines Aufwärtsstrecken-Steuersignalisierung der Zelle in dem angrenzenden Subrahmen und der anderen Zelle, die Trägeraggregation mit der Zelle in dem angrenzenden Subrahmen verarbeitet, tragenden PUSCH repräsentiert; oder

Bestimmen siebter Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß Formel (9), wobei:

$$\sum_{c} w(i) \cdot P_{PUSCH,c}(i) + u(i) \cdot P_{PUSCH,k}(t) + v(i) \cdot P_{PUCCH}(i) \leq P_{CMAX}(i) \tag{9}$$

wobei *w(i), u(i)* und v(i) Gewichtungsfaktoren repräsentieren, deren Wertebereich [0, 1] ist; c eine Zelle reprä-

sentiert; $\sum_{c} w(i) \cdot P_{PUSCH,c}(i)$ die siebte Sendeleistung des PUSCH der Zelle im aktuellen Subrahmen und der anderen Zelle, die Trägeraggregation mit der Zelle in dem aktuellen Subrahmen verarbeitet, repräsentiert; $P_{PUCCH}(i)$ fünfte Sendeleistung, die durch das Benutzergerät durch Durchführen von Aufwärtsstrecken-Leistungsregelung erhalten wird, eines PUCCH der Zelle oder der anderen Zelle, die Trägeraggregation mit der Zelle in dem aktuellen Subrahmen verarbeitet, repräsentiert; $P_{CMAX}(i)$ maximal zulässige Leistung des aktuellen Subrahmens repräsentiert; und $P_{PUSCH,k}(t)$ zweite Sendeleistung, die durch das Benutzergerät durch Durchführen von Aufwärtsstrecken-Leistungsregelung erhalten wird, eines Aufwärtsstreckensignalisierung der Zelle in dem angrenzenden Subrahmen und der anderen Zelle, die Trägeraggregation mit der Zelle in dem angrenzenden Subrahmen verarbeitet, tragenden PUSCH repräsentiert.

8. Verfahren nach Anspruch 6, wobei der PUSCH der Zelle in dem aktuellen Subrahmen und der anderen Zelle, die Trägeraggregation mit der Zelle in dem aktuellen Subrahmen verarbeitet, einen PUSCH umfasst, der Aufwärtsstrecken-Steuersignalisierung trägt; und das Bestimmen (102) der Sendeleistung des PUSCH der Zelle in dem aktuellen Subrahmen und der anderen Zelle in dem aktuellen Subrahmen durch das Benutzergerät gemäß der bestimmten Überlappung Folgendes umfasst:

Bestimmen achter Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß den Formeln (10) und (11) oder gemäß den Formeln (10) und (12), wobei:

$$\sum_{c \neq j} w(i) \cdot P_{PUSCH,c}(i) \leq \left( P_{CMAX}(i) - P_{PUSCH,j}(i) - P_{PUSCH,k}(t) \right) \tag{10}$$

$$P_{PUSCH,j}(i) = \min \left\{ P_{PUSCH,j\_o}(i), \left( P_{CMAX}(i) - P_{PUSCH,k\_o}(i-1) \right) \right\} \tag{11}$$

$$P_{PUSCH,j}(i) = \min \left\{ P_{PUSCH,j\_o}(i), \left( P_{CMAX}(i) - P_{PUSCH,k\_o}(i+1) \right) \right\} \tag{12}$$

wobei w(i) einen Gewichtungsfaktor repräsentiert, dessen Wertebereich [0, 1] ist; c eine Zelle repräsentiert;

$\sum_{c \neq j} w(i) \cdot P_{PUSCH,c}(i)$ achte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{CMAX}(i)$ maximal zulässige Leistung des aktuellen Subrahmens repräsentiert; $P_{PUSCH,k}(t)$ dritte Sendeleistung, die durch das Benutzergerät durch Durchführen von Aufwärtsstrecken-Leistungsregelung erhalten wird, eines Aufwärtsstreckensignalisierung der Zelle in dem angrenzenden Subrahmen und der anderen Zelle, die Trägeraggregation mit der Zelle in dem angrenzenden Subrahmen verarbeitet, tragenden PUSCH repräsentiert, $P_{PUSCH,j\_o}(i)$ dritte Sendeleistung, die durch das Benutzergerät durch Durchführen von Aufwärtsstrecken-Leistungsregelung erhalten wird, eines in dem aktuellen Rahmen enthaltene Aufwärtsstreckensignalisierung tragenden PUSCH repräsentiert; $P_{PUSCH,k\_o}(i-1)$ erste Sendeleistung eines Aufwärtsstreckensignalisierung der anderen Zelle, die Trägeraggregation mit der Zelle in einem angrenzenden Subrahmen vor dem aktuellen Subrahmen verarbeitet, tragenden PUSCH repräsentiert; $P_{PUSCH,k\_o}(i+1)$ erste Sendeleistung eines Aufwärtsstreckensignalisierung der anderen Zelle, die Trägeraggregation mit der Zelle in einem angrenzenden Subrahmen nach dem aktuellen Subrahmen verarbeitet, tragenden PUSCH repräsentiert; oder
Bestimmen neunter Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß Formel (13), wobei:

$$\sum_{c\neq j} w(i) \cdot P_{PUSCH,c}(i) + u(i) \cdot P_{PUSCH,j}(i) + v(i) \cdot P_{PUSCH,k}(t) \leq P_{CMAX}(i) \tag{13}$$

wobei *w(i), u(i)* und *v(i)* Gewichtungsfaktoren repräsentieren, deren Wertebereich [0, 1] ist; *c* eine Zelle repräsentiert; $\sum_{c\neq j} w(i) \cdot P_{PUSCH,c}(i)$ neunte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{CMAX}(i)$ maximal zulässige Leistung des aktuellen Subrahmens repräsentiert; $P_{PUSCH,k}(t)$ die vierte Sendeleistung, die durch das Benutzergerät durch Durchführen von Aufwärtsstrecken-Leistungsregelung erhalten wird, eines Aufwärtsstreckensignalisierung der Zelle in dem angrenzenden Subrahmen und der anderen Zelle, die Trägeraggregation mit der Zelle in dem angrenzenden Subrahmen verarbeitet, tragenden PUSCH repräsentiert; $P_{PUSCH,j}(i)$ dritte Sendeleistung, die durch das Benutzergerät durch Durchführen von Aufwärtsstrecken-Leistungsregelung erhalten wird, eines Aufwärtsstrecken-Steuersignalisierung in dem aktuellen Subrahmen tragenden PUSCH repräsentiert.

9. Verfahren nach Anspruch 6, wobei der PUSCH der Zelle in dem aktuellen Subrahmen und der anderen Zelle, die Trägeraggregation mit der Zelle in dem aktuellen Subrahmen verarbeitet, einen PUSCH umfasst, der Aufwärtsstreckensignalisierung trägt; und das Bestimmen (102) der Sendeleistung des PUSCH der Zelle in dem aktuellen Subrahmen und der anderen Zelle in dem aktuellen Subrahmen durch das Benutzergerät gemäß der bestimmten Überlappung Folgendes umfasst:

Bestimmen zehnter Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß den Formeln (14) und (15) oder gemäß den Formeln (14) und (16), wobei:

$$\sum_{c\neq j} w(i) \cdot P_{PUSCH,c}(i) \leq \left( P_{CMAX}(i) - P_{PUSCH,j}(i) - P_{PUSCH,k}(t) - P_{PUCCH}(i) \right) \tag{14}$$

$$P_{PUSCH,j}(i) = \min \left\{ P_{PUSCH,j\_o}(i), \left( P_{CMAX}(i) - P_{PUCCH}(i) - P_{PUSCH,k\_o}(i-1) \right) \right\} \tag{15}$$

$$P_{PUSCH,j}(i) = \min \left\{ P_{PUSCH,j\_o}(i), \left( P_{CMAX}(i) - P_{PUCCH}(i) - P_{PUSCH,k\_o}(i+1) \right) \right\} \tag{16}$$

wobei w(i) einen Gewichtungsfaktor repräsentiert, dessen Wertebereich [0, 1] ist; c eine Zelle repräsentiert; $\sum_{c\neq j} w(i) \cdot P_{PUSCH,c}(i)$ die zehnte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(i)$ sechste Sendeleistung, die durch das Benutzergerät durch Durchführen von Aufwärtsstrecken-Leistungsregelung erhalten wird, des PUCCH der Zelle oder der anderen Zelle, die Trägeraggregation mit der Zelle in dem aktuellen Subrahmen verarbeitet, repräsentiert; $P_{CMAX}(i)$ maximal zulässige Leistung des aktuellen Subrahmens repräsentiert; $P_{PUSCH,k}(t)$ fünfte Sendeleistung, die durch das Benutzergerät durch Durchführen von Aufwärtsstrecken-Leistungsregelung erhalten wird, eines Aufwärtsstreckensignalisierung der Zelle in dem angrenzenden Subrahmen und der anderen Zelle, die Trägeraggregation mit der Zelle in dem angrenzenden Subrahmen verarbeitet, tragenden PUSCH repräsentiert; $P_{PUSCH,j\_o}(i)$ vierte Sendeleistung, die durch das Benutzergerät durch Durchführen von Aufwärtsstrecken-Leistungsregelung erhalten wird, des in dem aktuellen Rahmen enthaltene Aufwärtsstreckensignalisierung tragenden PUSCH repräsentiert; $P_{PUSCH,k\_o}(i-1)$ zweite Sendeleistung eines Aufwärtsstreckensignalisierung der anderen Zelle, die Trägeraggregation mit der Zelle in einem angrenzenden Subrahmen vor dem aktuellen Subrahmen verarbeitet, tragenden PUSCH repräsentiert; $P_{PUSCH,k\_o}(i+1)$ zweite Sendeleistung eines Aufwärtsstreckensignalisierung der anderen Zelle, die Trägeraggregation mit der Zelle in einem angrenzenden Subrahmen nach dem aktuellen Subrahmen verarbeitet, tragenden PUSCH repräsentiert; oder
Bestimmen elfter Sendeleistung des PUSCH der Zelle in dem aktuellen Subrahmen und der anderen Zelle, die Trägeraggregation mit der Zelle in dem aktuellen Subrahmen verarbeitet, durch das Benutzergerät gemäß Formel (17), wobei:

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i) - P_{PUCCH}(i) \tag{17}$$

wobei *w(i), u(i)* und *v(i)* Gewichtungsfaktoren repräsentieren, deren Wertebereich [0, 1] ist; c eine Zelle repräsentiert; $\sum_{c \neq j} w(i) \cdot P_{PUSCH,c}(i)$ elfte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(i)$ siebte Sendeleistung, die durch das Benutzergerät durch Durchführen von Aufwärtsstrecken-Leistungsregelung erhalten wird, des PUCCH der Zelle oder der anderen Zelle, die Trägeraggregation mit der Zelle in dem aktuellen Subrahmen verarbeitet, repräsentiert; $P_{CMAX}(i)$ maximal zulässige Leistung des aktuellen Subrahmens repräsentiert; $P_{PUSCH,j}(i)$ vierte Sendeleistung, die durch das Benutzergerät durch Durchführen von Aufwärtsstrecken-Leistungsregelung erhalten wird, des Aufwärtsstrecken-Steuersignalisierung in dem aktuellen Subrahmen tragenden PUSCH repräsentiert; $P_{PUSCH,k}(t)$ sechste Sendeleistung, die durch das Benutzergerät durch Durchführen von Aufwärtsstrecken-Leistungsregelung erhalten wird, eines Aufwärtsstreckensignalisierung der Zelle in dem angrenzenden Subrahmen und der anderen Zelle, die Trägeraggregation mit der Zelle in dem angrenzenden Subrahmen verarbeitet, tragenden PUSCH repräsentiert.

**10.** Benutzergerät, umfassend:

eine Überlappungsbestimmungseinheit (21), ausgelegt zum Bestimmen einer Überlappung zwischen einem Aufwärtsstreckenkanal einer Zelle in einem aktuellen Subrahmen und einem Aufwärtsstreckenkanal einer anderen Zelle in einem angrenzenden Subrahmen, wobei sich die Zelle in Trägeraggregation mit der anderen Zelle befindet; und
eine Leistungsbestimmungseinheit (22), ausgelegt zum Bestimmen von Sendeleistung eines "Physical Uplink Shared Channel", PUSCH, der Zelle in dem aktuellen Subrahmen und der anderen Zelle in dem aktuellen Subrahmen gemäß der durch die Überlappungsbestimmungseinheit (21) bestimmten Überlappung.

**11.** Benutzergerät nach Anspruch 10, wobei die durch die Überlappungsbestimmungseinheit (21) bestimmte Überlappung Folgendes umfasst: der PUSCH der Zelle in dem aktuellen Subrahmen ist mit einem "Physical Uplink Control Channel", PUCCH, der anderen Zelle in dem angrenzenden Subrahmen überlappt, wobei sich die andere Zelle in Trägeraggregation mit der Zelle befindet.

**12.** Benutzergerät nach Anspruch 11, wobei die Leistungsbestimmungseinheit (22) spezifisch ausgelegt ist zum Bestimmen erster Sendeleistung des PUSCH der Zelle in dem aktuellen Subrahmen und der anderen Zelle, die Trägeraggregation mit der Zelle in dem aktuellen Subrahmen verarbeitet, gemäß Formel (1), wobei:

$$\sum_{c} w(i) \cdot P_{PUSCH,c}(i) \leq \left( P_{CMAX}(i) - \max\left( P_{PUCCH}(i), \ P_{PUCCH}(t) \right) \right) \tag{1}$$

wobei w(i) einen Gewichtungsfaktor repräsentiert, dessen Wertebereich [0, 1] ist; c eine Zelle repräsentiert; $\sum_{c} w(i) \cdot P_{PUSCH,c}(i)$ die erste Sendeleistung des PUSCH der Zelle in dem aktuellen Subrahmen und der anderen Zelle, die Trägeraggregation mit der Zelle, in dem aktuellen Subrahmen verarbeitet, repräsentiert; $P_{PUCCH}(i)$ die erste Sendeleistung, die durch das Benutzergerät durch Durchführen von Aufwärtsstrecken-Leistungsregelung erhalten wird, eines PUCCH der anderen Zelle, die Trägeraggregation mit der Zelle in dem aktuellen Subrahmen verarbeitet, repräsentiert; $P_{PUCCH}(t)$ erste Sendeleistung, die durch das Benutzergerät durch Durchführen von Aufwärtsstrecken-Leistungsregelung erhalten wird, des PUCCH der anderen Zelle, die Trägeraggregation mit der Zelle in dem angrenzenden Subrahmen verarbeitet, repräsentiert; und $P_{CMAX}(i)$ die maximal zulässige Leistung des aktuellen Subrahmens repräsentiert.

13. Benutzergerät nach Anspruch 11, wobei der PUSCH der Zelle in dem aktuellen Subrahmen und der anderen Zelle, die Trägeraggregation mit der Zelle in dem aktuellen Subrahmen verarbeitet, einen PUSCH umfasst, der Aufwärtsstrecken-Steuersignalisierung trägt; und die Leistungsbestimmungseinheit (22) spezifisch ausgelegt ist zum Bestimmen zweiter Sendeleistung des PUSCH der Zelle in dem aktuellen Subrahmen und der anderen Zelle, die Trägeraggregation mit der Zelle in dem aktuellen Subrahmen verarbeitet, gemäß den Formeln (2) und (3), wobei:

$$\sum_{c \neq j} w(i) \cdot P_{PUSCH,c}(i) \leq \left( P_{CMAX}(i) - P_{PUSCH,j}(i) - P_{PUCCH}(t) \right) \tag{2}$$

$$\dot{P}_{PUSCH,j}(i) = \min \left\{ P_{PUSCH,j\_o}(i), \left( P_{CMAX}(i) - P_{PUCCH}(t) \right) \right\} \tag{3}$$

wobei $w(i)$ einen Gewichtungsfaktor repräsentiert, dessen Wertebereich [0, 1] ist; c eine Zelle repräsentiert; $\sum_{c \neq j} w(i) \cdot P_{PUSCH,c}(i)$ zweite Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(t)$ zweite Sendeleistung, die durch das Benutzergerät durch Durchführen von Aufwärtsstrecken-Leistungsregelung erhalten wird, des PUCCH der anderen Zelle, die Trägeraggregation mit der Zelle in dem angrenzenden Subrahmen verarbeitet, repräsentiert; $P_{CMAX}(i)$ maximal zulässige Leistung des aktuellen Subrahmens repräsentiert; und $P_{PUSCH,j\_o}(i)$ erste Sendeleistung, die durch das Benutzergerät durch Durchführen von Aufwärtsstrecken-Leistungsregelung erhalten wird, eines Aufwärtsstrecken-Signalisierung in dem aktuellen Subrahmen tragenden PUSCH repräsentiert; oder

Bestimmen dritter Sendeleistung des PUSCH der Zelle in dem aktuellen Subrahmen und der anderen Zelle, die Trägeraggregation mit der Zelle in dem aktuellen Subrahmen verarbeitet, gemäß Formel (4), wobei:

$$\sum_{c \neq j} w(i) \cdot P_{PUSCH,c}(i) + u(i) \cdot P_{PUSCH,j}(i) \leq \left( P_{CMAX}(i) - P_{PUCCH}(t) \right) \tag{4}$$

wobei $w(i)$ und $u(i)$ Gewichtungsfaktoren repräsentieren, deren Wertebereich [0, 1] ist; c eine Zelle repräsentiert; $\sum_{c \neq j} w(i) \cdot P_{PUSCH,c}(i)$ dritte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(t)$ dritte Sendeleistung, die durch das Benutzergerät durch Durchführen von Aufwärtsstrecken-Leistungsregelung erhalten wird, des PUCCH der anderen Zelle, die Trägeraggregation mit der Zelle in dem angrenzenden Subrahmen verarbeitet, repräsentiert; $P_{CMAX}(i)$ maximal zulässige Leistung des aktuellen Subrahmens repräsentiert; und $P_{PUSCH,j}(i)$ erste Sendeleistung, die durch das Benutzergerät durch Durchführen von Aufwärtsstrecken-Leistungsregelung erhalten wird, eines Aufwärtsstrecken-Steuersignalisierung in dem aktuellen Subrahmen tragenden PUSCH repräsentiert.

14. Benutzergerät nach Anspruch 11, wobei der PUSCH der Zelle in dem aktuellen Subrahmen und der anderen Zelle, die Trägeraggregation mit der Zelle in dem aktuellen Subrahmen verarbeitet, einen PUSCH umfasst, der Aufwärtsstrecken-Steuersignalisierung trägt; und die Leistungsbestimmungseinheit (22) spezifisch ausgelegt ist zum Bestimmen vierter Sendeleistung des PUSCH der Zelle in dem aktuellen Subrahmen und der anderen Zelle, die Trägeraggregation mit der Zelle in dem aktuellen Subrahmen verarbeitet, gemäß den Formeln (5) und (6), wobei:

$$\sum_{c \neq j} w(i) \cdot P_{PUSCH,c}(i) \leq \left( P_{CMAX}(i) - P_{PUSCH,j}(i) - \max \left( P_{PUCCH}(i), \ P_{PUCCH}(t) \right) \right) \tag{5}$$

$$P_{PUSCH,j}(i) = \min\left\{ P_{PUSCH,j\_o}(i), \left( P_{CMAX}(i) - \max\left( P_{PUCCH}(i), \ P_{PUCCH}(t) \right) \right) \right\} \tag{6}$$

wobei *w(i)* einen Gewichtungsfaktor repräsentiert, dessen Wertebereich [0, 1] ist; c eine Zelle repräsentiert;

$\sum_{c\neq j} w(i) \cdot P_{PUSCH,c}(i)$ vierte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(i)$ zweite Sendeleistung, die durch das Benutzergerät durch Durchführen von Aufwärtsstrecken-Leistungsregelung erhalten wird, des PUCCH der anderen Zelle, die Trägeraggregation mit der Zelle in dem aktuellen Subrahmen verarbeitet, repräsentiert; $P_{PUCCH}(t)$ vierte Sendeleistung, die durch das Benutzergerät durch Durchführen von Aufwärtsstrecken-Leistungsregelung erhalten wird, des PUCCH der anderen Zelle, die Trägeraggregation mit der Zelle in dem angrenzenden Subrahmen verarbeitet, repräsentiert; $P_{CMAX}(i)$ maximal zulässige Leistung des aktuellen Subrahmens repräsentiert; und $P_{PUSCH,j\_o}(i)$ zweite Sendeleistung, die durch das Benutzergerät durch Durchführen von Aufwärtsstrecken-Leistungsregelung erhalten wird, eines in dem aktuellen Rahmen enthaltene Aufwärtsstreckensignalisierung tragenden PUSCH repräsentiert; oder Bestimmen fünfter Sendeleistung des PUSCH der Zelle in dem aktuellen Subrahmen und der anderen Zelle, die Trägeraggregation mit der Zelle in dem aktuellen Subrahmen verarbeitet, gemäß Formel (7), wobei:

$$\sum_{c\neq j} w(i) \cdot P_{PUSCH,c}(i) + u(i) \cdot P_{PUSCH,j}(i) \leq \left( P_{CMAX}(i) - \max\left( P_{PUCCH}(i), \ P_{PUCCH}(t) \right) \right) \tag{7}$$

wobei w(i) und *u(i)* Gewichtungsfaktoren repräsentieren, deren Wertebereich [0, 1] ist; c eine Zelle repräsentiert;

$\sum_{c\neq j} w(i) \cdot P_{PUSCH,c}(i)$ fünfte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(i)$ dritte Sendeleistung, die durch das Benutzergerät durch Durchführen von Aufwärtsstrecken-Leistungsregelung erhalten wird, des PUCCH der anderen Zelle, die Trägeraggregation mit der Zelle in dem aktuellen Subrahmen verarbeitet, repräsentiert; $P_{PUCCH}(t)$ fünfte Sendeleistung, die durch das Benutzergerät durch Durchführen von Aufwärtsstrecken-Leistungsregelung erhalten wird, des PUCCH der anderen Zelle, die Trägeraggregation mit der Zelle in dem angrenzenden Subrahmen verarbeitet, repräsentiert; $P_{CMAX}(i)$ maximal zulässige Leistung des aktuellen Subrahmens repräsentiert; und $P_{PUSCH,j}(i)$ zweite Sendeleistung, die durch das Benutzergerät durch Durchführen von Aufwärtsstrecken-Leistungsregelurig erhalten wird, eines Aufwärtsstrecken-Steuersignalisierung in dem aktuellen Subrahmen tragenden PUSCH repräsentiert.

15. Benutzergerät nach Anspruch 10, wobei die durch die Überlappungsbestimmungseinheit (21) bestimmte Überlappung Folgendes umfasst: der PUSCH der Zelle in dem aktuellen Subrahmen oder ein PUCCH der Zelle in dem aktuellen Subrahmen oder ein PUSCH und/oder der PUCCH der Zelle in dem aktuellen Subrahmen ist mit einem PUSCH überlappt, der Aufwärtsstreckensignalisierung in der anderen Zelle in dem angrenzenden Subrahmen trägt, wobei sich die andere Zelle in Trägeraggregation mit der Zelle befindet.

16. Benutzergerät nach Anspruch 15, wobei die Leistungsbestimmungseinheit (22) spezifisch ausgelegt ist zum Bestimmen sechster Sendeleistung des PUSCH der Zelle in dem aktuellen Subrahmen und der anderen Zelle, die Trägeraggregation mit der Zelle in dem aktuellen Subrahmen verarbeitet, gemäß Formel (8), wobei:

$$\sum_{c} w(i) \cdot P_{PUSCH,c}(i) \leq \left( P_{CMAX}(i) - P_{PUSCH,k}(t) - P_{PUCCH}(i) \right) \tag{8}$$

wobei *w(i)* einen Gewichtungsfaktor repräsentiert, dessen Wertebereich [0, 1] ist; c eine Zelle repräsentiert;

$\sum_{c} w(i) \cdot P_{PUSCH,c}(i)$ sechste Sendeleistung des PUSCH der Zelle im aktuellen Subrahmen und der anderen Zelle, die Trägeraggregation mit der Zelle in dem aktuellen Subrahmen verarbeitet, repräsentiert; $P_{PUCCH}(i)$ vierte Sendeleistung, die durch das Benutzergerät durch Durchführen von Aufwärtsstrecken-Leistungsregelung erhalten wird, eines PUCCH der Zelle oder der anderen Zelle, die Trägeraggregation mit der Zelle in dem aktuellen Subrahmen verarbeitet, repräsentiert; $P_{CMAX}(i)$ maximal zulässige Leistung des aktuellen Subrahmens repräsentiert; $P_{PUSCH,k}(t)$ erste Sendeleistung, die durch das Benutzergerät durch Durchführen von Aufwärtsstrecken-Leistungsregelung erhalten wird, eines Aufwärtsstrecken-Steuersignalisierung der Zelle in dem angrenzenden Subrahmen und der anderen Zelle, die Trägeraggregation mit der Zelle in dem angrenzenden Subrahmen verarbeitet, tragenden PUSCH repräsentiert; oder Bestimmen siebter Sendeleistung des PUSCH der Zelle in dem aktuellen Subrahmen und der anderen Zelle, die Trägeraggregation mit der Zelle in dem aktuellen Subrahmen verarbeitet, gemäß Formel (9), wobei:

$$\sum_c w(i) \cdot P_{PUSCH,c}(i) + u(i) \cdot P_{PUSCH,k}(t) + v(i) \cdot P_{PUCCH}(i) \leq P_{CMAX}(i) \tag{9}$$

wobei $w(i)$, $u(i)$ und $v(i)$ Gewichtungsfaktoren repräsentieren, deren Wertebereich [0, 1] ist; c eine Zelle repräsentiert;

$\sum_c w(i) \cdot P_{PUSCH,c}(i)$ siebte Sendeleistung des PUSCH der Zelle im aktuellen Subrahmen und der anderen Zelle, die Trägeraggregation mit der Zelle in dem aktuellen Subrahmen verarbeitet, repräsentiert; $P_{PUCCH}(i)$ fünfte Sendeleistung, die durch das Benutzergerät durch Durchführen von Aufwärtsstrecken-Leistungsregelung erhalten wird, eines PUCCH der Zelle oder der anderen Zelle, die Trägeraggregation mit der Zelle in dem aktuellen Subrahmen verarbeitet, repräsentiert; $P_{CMAX}(i)$ maximal zulässige Leistung des aktuellen Subrahmens repräsentiert; und $P_{PUSCH,k}(t)$ zweite Sendeleistung, die durch das Benutzergerät durch Durchführen von Aufwärtsstrecken-Leistungsregelung erhalten wird, eines Aufwärtsstreckensignalisierung der Zelle in dem angrenzenden Subrahmen und der anderen Zelle, die Trägeraggregation mit der Zelle in dem angrenzenden Subrahmen verarbeitet, tragenden PUSCH repräsentiert.

17. Benutzergerät nach Anspruch 15, wobei der PUSCH der Zelle in dem aktuellen Subrahmen und der anderen Zelle, die Trägeraggregation mit der Zelle in dem aktuellen Subrahmen verarbeitet, einen PUSCH umfasst, der Aufwärtsstrecken-Steuersignalisierung trägt; und die Leistungsbestimmungseinheit (22) spezifisch ausgelegt ist zum Bestimmen achter Sendeleistung des PUSCH der Zelle in dem aktuellen Subrahmen und der anderen Zelle, die Trägeraggregation mit der Zelle in dem aktuellen Subrahmen verarbeitet, gemäß den Formeln (10) und (11) oder gemäß den Formeln (10) und (12), wobei:

$$\sum_{c \neq j} w(i) \cdot P_{PUSCH,c}(i) \leq \left( P_{CMAX}(i) - P_{PUSCH,j}(i) - P_{PUSCH,k}(t) \right) \tag{10}$$

$$P_{PUSCH,j}(i) = \min \left\{ P_{PUSCH,j\_o}(i), \left( P_{CMAX}(i) - P_{PUSCH,k\_o}(i-1) \right) \right\} \tag{11}$$

$$P_{PUSCH,j}(i) = \min \left\{ P_{PUSCH,j\_o}(i), \left( P_{CMAX}(i) - P_{PUSCH,k\_o}(i+1) \right) \right\} \tag{12}$$

wobei $w(i)$ einen Gewichtungsfaktor repräsentiert, dessen Wertebereich [0, 1] ist; c eine Zelle repräsentiert;

$\sum_{c \neq j} w(i) \cdot P_{PUSCH,c}(i)$ achte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{CMAX}(i)$ maximal zulässige Leistung des aktuellen Subrahmens repräsentiert; $P_{PUSCH,k}(t)$ dritte Sendeleistung, die durch das Benutzergerät durch Durchführen von Aufwärtsstrecken-Leistungsregelung erhalten wird, eines Aufwärtsstreckensignalisierung der Zelle in dem angrenzenden Subrahmen und der anderen Zelle, die Trägeraggregation mit der Zelle in dem angrenzenden Subrahmen verarbeitet, tragenden PUSCH repräsentiert, $P_{PUSCH,j\_o}(i)$ dritte Sendeleistung, die durch das Benutzergerät durch Durchführen von Aufwärtsstrecken-Leistungsregelung erhalten wird, eines in dem aktuellen Rahmen enthaltene Aufwärtsstreckensignalisierung tragenden PUSCH repräsentiert; $P_{PUSCH,k\_o}(i-1)$ erste Sendeleistung eines Aufwärtsstreckensignalisierung der anderen Zelle, die Trägeraggregation mit der Zelle in einem angrenzenden Subrahmen vor dem aktuellen Subrahmen verarbeitet, tragenden PUSCH repräsentiert; $P_{PUSCH,k\_o}(i+1)$ erste Sendeleistung eines Aufwärtsstreckensignalisierung der anderen Zelle, die Trägeraggregation mit der Zelle in einem angrenzenden Subrahmen nach dem aktuellen Subrahmen verarbeitet, tragenden PUSCH repräsentiert; oder

Bestimmen neunter Sendeleistung des PUSCH der Zelle in dem aktuellen Subrahmen und der anderen Zelle, die Trägeraggregation mit der Zelle in dem aktuellen Subrahmen verarbeitet, gemäß Formel (13), wobei:

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i) \tag{13}$$

wobei $w(i)$, $u(i)$ und $v(i)$ Gewichtungsfaktoren repräsentieren, deren Wertebereich [0, 1] ist; $c$ eine Zelle repräsentiert; $\sum_{c \neq j} w(i) \cdot P_{PUSCH,c}(i)$ neunte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{CMAX}(i)$ maximal zulässige Leistung des aktuellen Subrahmens repräsentiert; $P_{PUSCH,k}(t)$ die vierte Sendeleistung, die durch das Benutzergerät durch Durchführen von Aufwärtsstrecken-Leistungsregelung erhalten wird, eines Aufwärtsstreckensignalisierung der Zelle in dem angrenzenden Subrahmen und der anderen Zelle, die Trägeraggregation mit der Zelle in dem angrenzenden Subrahmen verarbeitet, tragenden PUSCH repräsentiert; und $P_{PUSCH,j}(i)$ dritte Sendeleistung, die durch das Benutzergerät durch Durchführen von Aufwärtsstrecken-Leistungsregelung erhalten wird, eines Aufwärtsstrecken-Steuersignalisierung in dem aktuellen Subrahmen tragenden PUSCH repräsentiert.

**18.** Benutzergerät nach Anspruch 15, wobei der PUSCH der Zelle in dem aktuellen Subrahmen und der anderen Zelle, die Trägeraggregation mit der Zelle in dem aktuellen Subrahmen verarbeitet, einen PUSCH umfasst, der Aufwärtsstreckensignalisierung trägt; und die Leistungsbestimmungseinheit (22) spezifisch ausgelegt ist zum

Bestimmen zehnter Sendeleistung des PUSCH der Zelle in dem aktuellen Subrahmen und der anderen Zelle, die Trägeraggregation mit der Zelle in dem aktuellen Subrahmen verarbeitet, gemäß den Formeln (14) und (15) oder gemäß den Formeln (14) und (16), wobei:

$$\sum_{c \neq j} w(i) \cdot P_{PUSCH,c}(i) \leq \left( P_{CMAX}(i) - P_{PUSCH,j}(i) - P_{PUSCH,k}(t) - P_{PUCCH}(i) \right) \tag{14}$$

$$P_{PUSCH,j}(i) = \min \left\{ P_{PUSCH,j\_o}(i), \left( P_{CMAX}(i) - P_{PUCCH}(i) - P_{PUSCH,k\_o}(i-1) \right) \right\} \tag{15}$$

$$P_{PUSCH,j}(i) = \min \left\{ P_{PUSCH,j\_o}(i), \left( P_{CMAX}(i) - P_{PUCCH}(i) - P_{PUSCH,k\_o}(i+1) \right) \right\} \tag{16}$$

wobei $w(i)$ einen Gewichtungsfaktor repräsentiert, dessen Wertebereich [0, 1] ist; $c$ eine Zelle repräsentiert; $\sum_{c \neq j} w(i) \cdot P_{PUSCH,c}(i)$ die zehnte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(i)$ sechste Sendeleistung, die durch das Benutzergerät durch Durchführen von Aufwärtsstrecken-Leistungsregelung erhalten wird, des PUCCH der Zelle oder der anderen Zelle, die Trägeraggregation mit der Zelle in dem aktuellen Subrahmen verarbeitet, repräsentiert; $P_{CMAX}(i)$ maximal zulässige Leistung des aktuellen Subrahmens repräsentiert; $P_{PUSCH,k}(t)$ fünfte Sendeleistung, die durch das Benutzergerät durch Durchführen von Aufwärtsstrecken-Leistungsregelung erhalten wird, eines Aufwärtsstreckensignalisierung der Zelle in dem angrenzenden Subrahmen und der anderen Zelle, die Trägeraggregation mit der Zelle in dem angrenzenden Subrahmen verarbeitet, tragenden PUSCH repräsentiert; $P_{PUSCH,j\_o}(i)$ vierte Sendeleistung, die durch das Benutzergerät durch Durchführen von Aufwärtsstrecken-Leistungsregelung erhalten wird, des in dem aktuellen Rahmen enthaltene Aufwärtsstreckensignalisierung tragenden PUSCH repräsentiert; $P_{PUSCH,k\_o}(i-1)$ weite Sendeleistung eines Aufwärtsstreckensignalisierung der anderen Zelle, die Trägeraggregation mit der Zelle in einem angrenzenden Subrahmen vor dem aktuellen Subrahmen verarbeitet, tragenden PUSCH repräsentiert; $P_{PUSCH,k\_o}(i+1)$ zweite Sendeleistung eines Aufwärtsstreckensignalisierung der anderen Zelle, die Trägeraggregation mit der Zelle in einem angrenzenden Subrahmen nach dem aktuellen Subrahmen verarbeitet, tragenden PUSCH repräsentiert; oder

Bestimmen elfter Sendeleistung des PUSCH der Zelle in dem aktuellen Subrahmen und der anderen Zelle, die Trägeraggregation mit der Zelle in dem aktuellen Subrahmen verarbeitet, gemäß Formel (17), wobei:

$$\sum_{c\neq j} w(i)\cdot P_{PUSCH,c}(i) + u(i)\cdot P_{PUSCH,j}(i) + v(i)\cdot P_{PUSCH,k}(t) \leq P_{CMAX}(i) - P_{PUCCH}(i) \tag{17}$$

wobei $w(i)$, $u(i)$ und $v(i)$ Gewichtungsfaktoren repräsentieren, deren Wertebereich [0, 1] ist; c eine Zelle repräsentiert;

$\sum_{c\neq j} w(i)\cdot P_{PUSCH,c}(i)$ elfte Sendeleistung eines keine Aufwärtsstrecken-Steuersignalisierung der Zelle in dem aktuellen Subrahmen und der anderen Zelle, die Trägeraggregation mit der Zelle in dem aktuellen Subrahmen verarbeitet, tragenden PUSCH repräsentiert; $P_{PUCCH}(i)$ siebte Sendeleistung, die durch das Benutzergerät durch Durchführen von Aufwärtsstrecken-Leistungsregelung erhalten wird, des PUCCH der Zelle oder der anderen Zelle, die Trägeraggregation mit der Zelle in dem aktuellen Subrahmen verarbeitet, repräsentiert; $P_{CMAX}(i)$ maximal zulässige Leistung des aktuellen Subrahmens repräsentiert; $P_{PUSCH,j}(i)$ vierte Sendeleistung, die durch das Benutzergerät durch Durchführen von Aufwärtsstrecken-Leistungsregelung erhalten wird, des Aufwärtsstrecken-Steuersignalisierung in dem aktuellen Subrahmen tragenden PUSCH repräsentiert; $P_{PUSCH,k}(t)$ sechste Sendeleistung, die durch das Benutzergerät durch Durchführen von Aufwärtsstrecken-Leistungsregelung erhalten wird, eines Aufwärtsstreckensignalisierung der Zelle in dem angrenzenden Subrahmen und der anderen Zelle, die Trägeraggregation mit der Zelle in dem angrenzenden Subrahmen verarbeitet, tragenden PUSCH repräsentiert.

**Revendications**

1. Procédé de détermination d'une puissance de transmission de liaison montante, consistant à :

déterminer (101), par un équipement d'utilisateur, un chevauchement entre un canal de liaison montante d'une cellule dans une sous-trame actuelle et un canal de liaison montante d'une autre cellule dans une sous-trame adjacente, la cellule étant en agrégation de porteuses avec l'autre cellule ; et
déterminer (102), par l'équipement d'utilisateur, selon le chevauchement déterminé, une puissance de transmission d'un canal partagé de liaison montante physique, PUSCH, de la cellule dans la sous-trame actuelle et de l'autre cellule dans la sous-trame actuelle.

2. Procédé selon la revendication 1, dans lequel : le chevauchement déterminé par l'équipement d'utilisateur consiste en ce que : le PUSCH de la cellule dans la sous-trame courante est chevauché par un canal de contrôle de liaison montante physique, PUCCH, de l'autre cellule dans la sous-trame adjacente, l'autre cellule étant en agrégation de porteuses avec la cellule.

3. Procédé selon la revendication 2, dans lequel: la détermination (102), par l'équipement d'utilisateur, selon le chevauchement prédéterminé, de la puissance de transmission du PUSCH de la cellule dans la sous-trame actuelle et de l'autre cellule dans la sous-trame actuelle consiste à :

déterminer, par l'équipement d'utilisateur, selon la formule (1), une première puissance de transmission du PUSCH de la cellule dans la sous-trame actuelle et de l'autre cellule qui traite une agrégation de porteuses avec la cellule dans la sous-trame actuelle, dans lequel :

$$\sum_{c} w(i)\cdot P_{PUSCH,c}(i) \leq \left( P_{CMAX}(i) - \max\left( P_{PUCCH}(i), \ P_{PUCCH}(t) \right) \right) \tag{1}$$

dans laquelle w(i) représente un facteur de pondération, dont la plage de valeurs est [0, 1] ; c représente une

cellule ;$\Sigma_c\ w(i)\cdot P_{PUSCH,c}(i)$ représente la première puissance de transmission du PUSCH de la cellule dans la sous-trame actuelle et de l'autre cellule qui traite une agrégation de porteuses avec la cellule dans la sous-trame actuelle ; $P_{PUCCH}(i)$ représente une première puissance de transmission, obtenue par l'équipement d'utilisateur en effectuant un contrôle de puissance de liaison montante, d'un PUCCH de l'autre cellule qui traite une agrégation de porteuses avec la cellule dans la sous-trame actuelle ; $P_{PUCCH}\textbf{(i)}$ représente une première puissance de transmission, obtenue par l'équipement d'utilisateur en effectuant un contrôle de puissance de liaison montante, du PUCCH de l'autre cellule qui traite une agrégation de porteuses avec la cellule dans la sous-trame adjacente ; et $P_{CMAX}(i)$ représente une puissance admissible maximale de la sous-trame actuelle.

4. Procédé selon la revendication 2, dans lequel le PUSCH de la cellule dans la sous-trame actuelle et de l'autre cellule qui traite une agrégation de porteuses avec la cellule dans la sous-trame actuelle consiste en un PUSCH portant un signalement de contrôle de liaison montante; et la détermination (102), par l'équipement d'utilisateur, selon le chevauchement prédéterminé, de la puissance de transmission du PUSCH de la cellule dans la sous-trame actuelle et de l'autre cellule dans la sous-trame actuelle consiste à :

déterminer, par l'équipement d'utilisateur, selon les formules (2) et (3), une deuxième puissance de transmission du PUSCH de la cellule dans la sous-trame actuelle et de l'autre cellule qui traite une agrégation de porteuses avec la cellule dans la sous-trame actuelle, dans lequel:

$$\sum_{c\neq j} w(i)\cdot P_{PUSCH,c}(i) \leq \left( P_{CMAX}(i) - P_{PUSCH,j}(i) - P_{PUCCH}(t)\right) \tag{2}$$

$$P_{PUSCH,j}(i) = \min\left\{ P_{PUSCH,j\_o}(i), \left( P_{CMAX}(i) - P_{PUCCH}(t)\right)\right\} \tag{3}$$

dans laquelle w(i) représente un facteur de pondération, dont la plage de valeurs est [0, 1]; c représente une cellule ; $\sum_{c\neq j}w(i)\cdot P_{PUSCH,c}(i)$ représente une deuxième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUCCH}(t)$ représente une deuxième puissance de transmission, obtenue par l'équipement d'utilisateur en effectuant un contrôle de puissance de liaison montante, du PUCCH de l'autre cellule qui traite une agrégation de porteuses avec la cellule dans la sous-trame adjacente; $P_{CMAX}(i)$ représente une puissance admissible maximale de la sous-trame actuelle; et $P_{PUSCH,j\_o}(i)$ représente une première puissance de transmission, obtenue par l'équipement d'utilisateur en effectuant un contrôle de puissance de liaison montante, d'un PUSCH portant un signalement de liaison montante dans la sous-trame actuelle ; ou

déterminer, par l'équipement d'utilisateur, selon la formule (4), une troisième puissance de transmission du PUSCH de la cellule dans la sous-trame actuelle et de l'autre cellule qui traite une agrégation de porteuses avec la cellule dans la sous-trame actuelle, dans lequel :

$$\sum_{c\neq j} w(i)\cdot P_{PUSCH,c}(i) + u(i)\cdot P_{PUSCH,j}(i) \leq \left( P_{CMAX}(i) - P_{PUCCH}(t)\right) \tag{4}$$

dans laquelle *w(i)* et *u(i)* représentent des facteurs de pondération, dont la plage de valeurs est [0, 1] ; c représente une cellule ; $\sum_{c\neq j}w(i)\cdot P_{PUSCH,c}(i)$ représente une troisième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUCCH}(t)$ représente une troisième puissance de transmission, obtenue par l'équipement d'utilisateur en effectuant un contrôle de puissance de liaison montante, du PUCCH de l'autre cellule qui traite une agrégation de porteuses avec la cellule dans la sous-trame adjacente ; $P_{CMAX}(i)$ représente une puissance admissible maximale de la sous-trame actuelle ; et $P_{PUSCH,j}(i)$ représente une première puissance de transmission, obtenue par l'équipement d'utilisateur en effectuant un contrôle de puissance de liaison montante, d'un PUSCH portant un signalement de contrôle de liaison montante dans la sous-trame actuelle.

5. Procédé selon la revendication 2, dans lequel le PUSCH de la cellule dans la sous-trame actuelle et de l'autre cellule qui traite une agrégation de porteuses avec la cellule dans la sous-trame actuelle consiste en un PUSCH portant un signalement de contrôle de liaison montante ; la détermination (102), par l'équipement d'utilisateur, selon le chevauchement prédéterminé, de la puissance de transmission du PUSCH de la cellule dans la sous-trame actuelle et de l'autre cellule dans la sous-trame actuelle consiste à :

déterminer, par l'équipement d'utilisateur, selon les formules (5) et (6), une quatrième puissance de transmission du PUSCH de la cellule dans la sous-trame actuelle et de l'autre cellule qui traite une agrégation de porteuses avec la cellule dans la sous-trame actuelle, dans lequel :

$$\sum_{c \neq j} w(i) \cdot P_{PUSCH,c}(i) \leq \left( P_{CMAX}(i) - P_{PUSCH,j}(i) - \max\left( P_{PUCCH}(i), \ P_{PUCCH}(t) \right) \right) \tag{5}$$

$$P_{PUSCH,j}(i) = \min\left\{ P_{PUSCH,j\_o}(i), \left( P_{CMAX}(i) - \max\left( P_{PUCCH}(i), \ P_{PUCCH}(t) \right) \right) \right\} \tag{6}$$

dans laquelle $w(i)$ représente un facteur de pondération, dont la plage de valeurs est [0, 1] ; $c$ représente une cellule ; $\sum_{c \neq j} w(i) \cdot P_{PUSCH,c}(i)$ représente une quatrième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUCCH}(i)$ représente une deuxième puissance de transmission, obtenue par l'équipement d'utilisateur en effectuant un contrôle de puissance de liaison montante, du PUCCH de l'autre cellule qui traite une agrégation de porteuses avec la cellule dans la sous-trame actuelle ; $P_{PUCCH}(t)$ représente une quatrième puissance de transmission, obtenue par l'équipement d'utilisateur en effectuant un contrôle de puissance de liaison montante, du PUCCH de l'autre cellule qui traite une agrégation de porteuses avec la cellule dans la sous-trame adjacente ; $P_{CMAX}(i)$ représente une puissance admissible maximale de la sous-trame actuelle ; et $P_{PUSCH,j\_o}(i)$ représente une deuxième puissance de transmission, obtenue par l'équipement d'utilisateur en effectuant un contrôle de puissance de liaison montante, d'un PUSCH portant un signalement de liaison montante compris dans la trame actuelle ; ou

déterminer, par l'équipement d'utilisateur, selon la formule (7), une cinquième puissance de transmission du PUSCH de la cellule dans la sous-trame actuelle et de l'autre cellule qui traite une agrégation de porteuses avec la cellule dans la sous-trame actuelle, dans lequel :

$$\sum_{c \neq j} w(i) \cdot P_{PUSCH,c}(i) + u(i) \cdot P_{PUSCH,j}(i) \leq \left( P_{CMAX}(i) - \max\left( P_{PUCCH}(i), \ P_{PUCCH}(t) \right) \right) \tag{7}$$

dans laquelle $w(i)$ et $u(i)$ représentent des facteurs de pondération, dont la plage de valeurs est [0, 1] ; $c$ représente une cellule ; $\sum_{c \neq j} w(i) \cdot P_{PUSCH,c}(i)$ représente une cinquième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUCCH}(i)$ représente une troisième puissance de transmission, obtenue par l'équipement d'utilisateur en effectuant un contrôle de puissance de liaison montante, du PUCCH de l'autre cellule qui traite une agrégation de porteuses avec la cellule dans la sous-trame actuelle ; $P_{PUCCH}(t)$ représente une cinquième puissance de transmission, obtenue par l'équipement d'utilisateur en effectuant un contrôle de puissance de liaison montante, du PUCCH de l'autre cellule qui traite une agrégation de porteuses avec la cellule dans la sous-trame adjacente ; $P_{CMAX}(i)$ représente une puissance admissible maximale de la sous-trame actuelle; et $P_{PUSCH,j}(i)$ représente une deuxième puissance de transmission, obtenue par l'équipement d'utilisateur en effectuant un contrôle de puissance de liaison montante, d'un PUSCH portant un signalement de contrôle de liaison montante dans la sous-trame actuelle.

6. Procédé selon la revendication 1, dans lequel le chevauchement déterminé par l'équipement d'utilisateur consiste en ce que : le PUSCH de la cellule dans la sous-trame actuelle, ou un PUCCH de la cellule dans la sous-trame actuelle, ou le PUSCH et/ou un PUCCH de la cellule dans la sous-trame actuelle est/sont chevauché(s) par un PUSCH portant un signalement de liaison montante dans l'autre cellule dans la sous-trame adjacente, l'autre cellule étant en agrégation de porteuses avec la cellule.

7. Procédé selon la revendication 6, dans lequel la détermination (102), par l'équipement d'utilisateur, selon le chevauchement prédéterminé, de la puissance de transmission du PUSCH de la cellule dans la sous-trame actuelle et de l'autre cellule dans la sous-trame actuelle consiste à :

déterminer, par l'équipement d'utilisateur, selon la formule (8), une sixième puissance de transmission du PUSCH de la cellule dans la sous-trame actuelle et de l'autre cellule qui traite une agrégation de porteuses avec la cellule dans la sous-trame actuelle, dan lequel :

$$\sum_{c} w(i) \cdot P_{PUSCH,c}(i) \leq \left( P_{CMAX}(i) - P_{PUSCH,k}(t) - P_{PUCCH}(i) \right) \tag{8}$$

dans laquelle $w(i)$ représente un facteur de pondération, dont la plage de valeurs est [0, 1] ; c représente une cellule ; $\sum_c w(i) \cdot P_{PUSCH,c}(i)$ représente la sixième puissance de transmission du PUSCH de la cellule dans la sous-trame actuelle et de l'autre cellule qui traite une agrégation de porteuses avec la cellule dans la sous-trame actuelle ; $P_{PUCCH}(i)$ représente une quatrième puissance de transmission, obtenue par l'équipement d'utilisateur en effectuant un contrôle de puissance de liaison montante, d'un PUCCH de la cellule ou de l'autre cellule qui traite une agrégation de porteuses avec la cellule dans la sous-trame actuelle ; $P_{CMAX}(i)$ représente une puissance admissible maximale de la sous-trame actuelle ; et $P_{PUSCH,k(t)}$ représente une première puissance de transmission, obtenue par l'équipement d'utilisateur en effectuant un contrôle de puissance de liaison montante, d'un PUSCH portant un signalement de contrôle de liaison montante de la cellule dans la sous-trame adjacente et de l'autre cellule qui traite une agrégation de porteuses avec la cellule dans la sous-trame adjacente ; ou

déterminer, par l'équipement d'utilisateur, selon la formule (9), une septième puissance de transmission du PUSCH de la cellule dans la sous-trame actuelle et de l'autre cellule qui traite une agrégation de porteuses avec la cellule dans la sous-trame actuelle, dans lequel :

$$\sum_{c} w(i) \cdot P_{PUSCH,c}(i) + u(i) \cdot P_{PUSCH,k}(t) + v(i) \cdot P_{PUCCH}(i) \leq P_{CMAX}(i) \tag{9}$$

dans laquelle $w(i)$, $u(i)$ et $v(i)$ représentent des facteurs de pondération, dont la plage de valeurs est [0, 1] ; c représente une cellule ; $\sum_c w(i) \cdot P_{PUSCH,c}(i)$ représente la septième puissance de transmission du PUSCH de la cellule dans la sous-trame actuelle et de l'autre cellule qui traite une agrégation de porteuses avec la cellule dans la sous-trame actuelle ; $P_{PUCCH}(i)$ représente une cinquième puissance de transmission, obtenue par l'équipement d'utilisateur en effectuant un contrôle de puissance de liaison montante, d'un PUCCH de la cellule ou de l'autre cellule qui traite une agrégation de porteuses avec la cellule dans la sous-trame actuelle ; $P_{CMAX}(i)$ représente une puissance admissible maximale de la sous-trame actuelle ; et $P_{PUSCH,k}(t)$ représente une deuxième puissance de transmission, obtenue par l'équipement d'utilisateur en effectuant un contrôle de puissance de liaison montante, d'un PUSCH portant un signalement de liaison montante de la cellule dans la sous-trame adjacente et de l'autre cellule qui traite une agrégation de porteuses avec la cellule dans la sous-trame adjacente.

8. Procédé selon la revendication 6, dans lequel le PUSCH de la cellule dans la sous-trame actuelle et de l'autre cellule qui traite une agrégation de porteuses avec la cellule dans la sous-trame actuelle consiste en un PUSCH portant un signalement de contrôle de liaison montante; et la détermination (102), par l'équipement d'utilisateur, selon le chevauchement prédéterminé, de la puissance de transmission du PUSCH de la cellule dans la sous-trame actuelle et de l'autre cellule dans la sous-trame actuelle consiste à :

déterminer, par l'équipement d'utilisateur, selon les formules (10) et (11) ou selon les formules (10) et (12), une huitième puissance de transmission du PUSCH de la cellule dans la sous-trame actuelle et de l'autre cellule qui traite une agrégation de porteuses avec la cellule dans la sous-trame actuelle, dans lequel :

$$\sum_{c \neq j} w(i) \cdot P_{PUSCH,c}(i) \leq \left( P_{CMAX}(i) - P_{PUSCH,j}(i) - P_{PUSCH,k}(t) \right) \tag{10}$$

$$P_{PUSCH,j}(i) = \min\left\{P_{PUSCH,j\_o}(i), \left(P_{CMAX}(i) - P_{PUSCH,k\_o}(i-1)\right)\right\} \tag{11}$$

$$P_{PUSCH,j}(i) = \min\left\{P_{PUSCH,j\_o}(i), \left(P_{CMAX}(i) - P_{PUSCH,k\_o}(i+1)\right)\right\} \tag{12}$$

dans laquelle $w(i)$ représente un facteur de pondération, dont la plage de valeurs est [0, 1] ; $c$ représente une cellule; $\sum_{c\neq j} w(i) \cdot P_{PUSCH,c}(i)$ représente une huitième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{CMAX}(i)$ représente une puissance admissible maximale de la sous-trame actuelle ; $P_{PUSCH,k}(t)$ représente une troisième puissance de transmission, obtenue par l'équipement d'utilisateur en effectuant un contrôle de puissance de liaison montante, d'un PUSCH portant un signalement de liaison montante de la cellule dans la sous-trame adjacente et de l'autre cellule qui traite une agrégation de porteuses avec la cellule dans la sous-trame adjacente ; $P_{PUSCH,j\_o}(i)$ représente une troisième puissance de transmission, obtenue par l'équipement d'utilisateur en effectuant un contrôle de puissance de liaison montante, d'un PUSCH portant un signalement de liaison montante compris dans la trame actuelle ; $P_{PUSCH,k\_o}(i+1)$ représente une première puissance de transmission d'un PUSCH portant un signalement de liaison montante de l'autre cellule qui traite une agrégation de porteuses avec la cellule dans une sous-trame adjacente avant la sous-trame actuelle; $P_{PUSCH,k\_o}(i-1)$ représente une première puissance de transmission d'un PUSCH portant un signalement de liaison montante de l'autre cellule qui traite une agrégation de porteuses avec la cellule dans une sous-trame adjacente après la sous-trame actuelle ; ou déterminer, par l'équipement d'utilisateur, selon la formule (13), une neuvième puissance de transmission du PUSCH de la cellule dans la sous-trame actuelle et de l'autre cellule qui traite une agrégation de porteuses avec la cellule dans la sous-trame actuelle, dans lequel:

$$\sum_{c\neq j} w(i) \cdot P_{PUSCH,c}(i) + u(i) \cdot P_{PUSCH,j}(i) + v(i) \cdot P_{PUSCH,k}(t) \leq P_{CMAX}(i) \tag{13}$$

dans laquelle $w(i)$, $u(i)$ et $v(i)$ représentent des facteurs de pondération, dont la plage de valeurs est [0, 1] ; $c$ représente une cellule ; $\sum_{c\neq j} w(i) \cdot P_{PUSCH,c}(i)$ représente une neuvième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{CMAX}(i)$ représente une puissance admissible maximale de la sous-trame actuelle ; $P_{PUSCH,k}(t)$ représente la quatrième puissance de transmission, obtenue par l'équipement d'utilisateur en effectuant un contrôle de puissance de liaison montante, d'un PUSCH portant un signalement de liaison montante de la cellule dans la sous-trame adjacente et de l'autre cellule qui traite une agrégation de porteuses avec la cellule dans la sous-trame adjacente ; $P_{PUSCH,j}(i)$ représente une troisième puissance de transmission, obtenue par l'équipement d'utilisateur en effectuant un contrôle de puissance de liaison montante, d'un PUSCH portant un signalement de contrôle de liaison montante dans la sous-trame actuelle.

9. Procédé selon la revendication 6, dans lequel le PUSCH de la cellule dans la sous-trame actuelle et de l'autre cellule qui traite une agrégation de porteuses avec la cellule dans la sous-trame actuelle consiste en un PUSCH portant un signalement de liaison montante; la détermination (102), par l'équipement d'utilisateur, selon le chevauchement prédéterminé, de la puissance de transmission du PUSCH de la cellule dans la sous-trame actuelle et de l'autre cellule dans la sous-trame actuelle consiste à :

déterminer, par l'équipement d'utilisateur, selon les formules (14) et (15) ou selon les formules (14) et (16), une dixième puissance de transmission du PUSCH de la cellule dans la sous-trame actuelle et de l'autre cellule qui traite une agrégation de porteuses avec la cellule dans la sous-trame actuelle, dans lequel :

$$\sum_{c\neq j} w(i) \cdot P_{PUSCH,c}(i) \leq \left(P_{CMAX}(i) - P_{PUSCH,j}(i) - P_{PUSCH,k}(t) - P_{PUCCH}(i)\right) \tag{14}$$

$$P_{PUSCH,j}(i) = \min\left\{ P_{PUSCH,j\_o}(i), \left( P_{CMAX}(i) - P_{PUCCH}(i) - P_{PUSCH,k\_o}(i-1) \right) \right\} \qquad (15)$$

$$P_{PUSCH,j}(i) = \min\left\{ P_{PUSCH,j\_o}(i), \left( P_{CMAX}(i) - P_{PUCCH}(i) - P_{PUSCH,k\_o}(i+1) \right) \right\} \qquad (16)$$

dans laquelle $w(i)$ représente un facteur de pondération, dont la plage de valeurs est [0, 1]; $c$ représente une cellule; $\sum_{c\neq j} w(i) \cdot P_{PUSCH,c}(i)$ représente la dixième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUCCH}(i)$ représente une sixième puissance de transmission, obtenue par l'équipement d'utilisateur en effectuant un contrôle de puissance de liaison montante, du PUCCH de la cellule ou de l'autre cellule qui traite une agrégation de porteuses avec la cellule dans la sous-trame actuelle ; $P_{CMAX}(i)$ représente une puissance admissible maximale de la sous-trame actuelle; $P_{PUSCH,k}(t)$ représente une cinquième puissance de transmission, obtenue par l'équipement d'utilisateur en effectuant un contrôle de puissance de liaison montante, d'un PUSCH portant un signalement de liaison montante de la cellule dans la sous-trame adjacente et de l'autre cellule qui traite une agrégation de porteuses avec la cellule dans la sous-trame adjacente ; $P_{PUSCH,j\_o}(i)$ représente une quatrième puissance de transmission, obtenue par l'équipement d'utilisateur en effectuant un contrôle de puissance de liaison montante, du PUSCH portant un signalement de liaison montante compris dans la trame actuelle ; $P_{PUSCH,k\_o}(i-1)$ représente une deuxième puissance de transmission d'un PUSCH portant un signalement de liaison montante de l'autre cellule qui traite une agrégation de porteuses avec la cellule dans une sous-trame adjacente avant la sous-trame actuelle ; $P_{PUSCH,k\_o}(i+1)$ représente une deuxième puissance de transmission d'un PUSCH portant un signalement de liaison montante de l'autre cellule qui traite une agrégation de porteuses avec la cellule dans une sous-trame adjacente après la sous-trame actuelle ; ou

déterminer, par l'équipement d'utilisateur, selon la formule (17), une onzième puissance de transmission du PUSCH de la cellule dans la sous-trame actuelle et de l'autre cellule qui traite une agrégation de porteuses avec la cellule dans la sous-trame actuelle, dans lequel :

$$\sum_{c\neq j} w(i) \cdot P_{PUSCH,c}(i) + u(i) \cdot P_{PUSCH,j}(i) + v(i) \cdot P_{PUSCH,k}(t) \leq P_{CMAX}(i) - P_{PUCCH}(i) \qquad (17)$$

dans laquelle $w(i)$, $u(i)$ et $v(i)$ représentent des facteurs de pondération, dont la plage de valeurs est [0, 1] ; $c$ représente une cellule ; $\sum_{c\neq j} w(i) \cdot P_{PUSCH,c}(i)$ représente une onzième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUCCH}(i)$ représente une septième puissance de transmission, obtenue par l'équipement d'utilisateur en effectuant un contrôle de puissance de liaison montante, du PUCCH de la cellule ou de l'autre cellule qui traite une agrégation de porteuses avec la cellule dans la sous-trame actuelle ; $P_{CMAX}(i)$ représente une puissance admissible maximale de la sous-trame actuelle ; $P_{PUSCH,j}(i)$ représente une quatrième puissance de transmission, obtenue par l'équipement d'utilisateur en effectuant un contrôle de puissance de liaison montante, du PUSCH portant un signalement de contrôle de liaison montante dans la sous-trame actuelle ; $P_{PUSCH,k}(t)$ représente une sixième puissance de transmission, obtenue par l'équipement d'utilisateur en effectuant un contrôle de puissance de liaison montante, d'un PUSCH portant un signalement de liaison montante de la cellule dans la sous-trame adjacente et de l'autre cellule qui traite une agrégation de porteuses avec la cellule dans la sous-trame adjacente.

**10.** Équipement d'utilisateur, comprenant :

une unité de détermination de chevauchement (21), conçue pour déterminer un chevauchement entre un canal de liaison montante d'une cellule dans une sous-trame actuelle et un canal de liaison montante d'une autre cellule dans une sous-trame adjacente, la cellule étant en agrégation de porteuses avec l'autre cellule ; et
une unité de détermination de puissance (22), conçue pour déterminer, selon le chevauchement déterminé par l'unité de détermination de chevauchement (21), une puissance de transmission d'un canal partagé de liaison montante physique, PUSCH, de la cellule dans la sous-trame actuelle et de l'autre cellule dans la sous-trame actuelle.

**11.** Équipement d'utilisateur selon la revendication 10, dans lequel : le chevauchement déterminé par l'unité de détermination de chevauchement (21) consiste en ce que : le PUSCH de la cellule dans la sous-trame courante est chevauché par un canal de contrôle de liaison montante physique, PUCCH, de l'autre cellule dans la sous-trame adjacente, l'autre cellule étant en agrégation de porteuses avec la cellule.

**12.** Équipement d'utilisateur selon la revendication 11, dans lequel l'unité de détermination de puissance (22) est spécifiquement conçue pour :

selon la formule (1), déterminer une première puissance de transmission du PUSCH de la cellule dans la sous-trame actuelle et de l'autre cellule qui traite une agrégation de porteuses avec la cellule dans la sous-trame actuelle, dans lequel :

$$\sum_c w(i) \cdot P_{PUSCH,c}(i) \le \left( P_{CMAX}(i) - \max\left( P_{PUCCH}(i), \ P_{PUCCH}(t) \right) \right) \tag{1}$$

dans laquelle $w(i)$ représente un facteur de pondération, dont la plage de valeurs est [0, 1] ; $c$ représente une cellule ; $\sum_c w(i) \cdot P_{PUSCH,c}(i)$ représente la première puissance de transmission du PUSCH de la cellule dans la sous-trame actuelle et de l'autre cellule qui traite une agrégation de porteuses avec la cellule dans la sous-trame actuelle ; $P_{PUCCH}(i)$ représente une première puissance de transmission, obtenue par l'équipement d'utilisateur en effectuant un contrôle de puissance de liaison montante, d'un PUCCH de l'autre cellule qui traite une agrégation de porteuses avec la cellule dans la sous-trame actuelle ; $P_{PUSCH}(t)$ représente une première puissance de transmission, obtenue par l'équipement d'utilisateur en effectuant un contrôle de puissance de liaison montante, du PUCCH de l'autre cellule qui traite une agrégation de porteuses avec la cellule dans la sous-trame adjacente ; et $P_{CMAX}(i)$ représente une puissance admissible maximale de la sous-trame actuelle.

**13.** Équipement d'utilisateur selon la revendication 11, dans lequel : le PUSCH de la cellule dans la sous-trame actuelle et de l'autre cellule qui traite une agrégation de porteuses avec la cellule dans la sous-trame actuelle consiste en un PUSCH portant un signalement de contrôle de liaison montante ; et l'unité de détermination de puissance (22) est spécialement conçue pour :

selon les formules (2) et (3), déterminer une deuxième puissance de transmission du PUSCH de la cellule dans la sous-trame actuelle et de l'autre cellule qui traite une agrégation de porteuses avec la cellule dans la sous-trame actuelle, dans lequel :

$$\sum_{c \ne j} w(i) \cdot P_{PUSCH,c}(i) \le \left( P_{CMAX}(i) - P_{PUSCH,j}(i) - P_{PUCCH}(t) \right) \tag{2}$$

$$P_{PUSCH,j}(i) = \min \left\{ P_{PUSCH,j\_o}(i), \left( P_{CMAX}(i) - P_{PUCCH}(t) \right) \right\} \tag{3}$$

dans laquelle $w(i)$ représente un facteur de pondération, dont la plage de valeurs est [0, 1] ; $c$ représente une cellule; $\sum_{c \ne j} w(i) \cdot P_{PUSCH,c}(i)$ représente une deuxième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUCCH}(t)$ représente une deuxième puissance de transmission, obtenue par l'équipement d'utilisateur en effectuant un contrôle de puissance de liaison montante, du PUCCH de l'autre cellule qui traite une agrégation de porteuses avec la cellule dans la sous-trame adjacente ; $P_{CMAX}(i)$ représente une puissance admissible maximale de la sous-trame actuelle ; et $P_{PUSCH,j\_o}(i)$, représente une première puissance de transmission, obtenue par l'équipement d'utilisateur en effectuant un contrôle de puissance de liaison montante, d'un PUSCH portant un signalement de liaison montante dans la sous-trame actuelle ; ou

selon la formule (4), déterminer une troisième puissance de transmission du PUSCH de la cellule dans la sous-trame actuelle et de l'autre cellule qui traite une agrégation de porteuses avec la cellule dans la sous-trame actuelle, dans lequel :

$$\sum_{c \neq j} w(i) \cdot P_{PUSCH,c}(i) + u(i) \cdot P_{PUSCH,j}(i) \leq \left( P_{CMAX}(i) - P_{PUCCH}(t) \right)$$

$$(4)$$

dans laquelle $w(i)$ et $u(i)$ représentent des facteurs de pondération, dont la plage de valeurs est [0, 1] ; $c$ représente une cellule ; $\sum_{c \neq j} w(i) \cdot P_{PUSCH,c}(i)$ représente une troisième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUCCH}(t)$ représente une troisième puissance de transmission, obtenue par l'équipement d'utilisateur en effectuant un contrôle de puissance de liaison montante, du PUCCH de l'autre cellule qui traite une agrégation de porteuses avec la cellule dans la sous-trame adjacente ; $P_{CMAX}(i)$ représente une puissance admissible maximale de la sous-trame actuelle; et $P_{PUSCH,j}(i)$ représente une première puissance de transmission, obtenue par l'équipement d'utilisateur en effectuant un contrôle de puissance de liaison montante, d'un PUSCH portant un signalement de contrôle de liaison montante dans la sous-trame actuelle.

14. Équipement d'utilisateur selon la revendication 11, dans lequel : le PUSCH de la cellule dans la sous-trame actuelle et de l'autre cellule qui traite une agrégation de porteuses avec la cellule dans la sous-trame actuelle consiste en un PUSCH portant un signalement de contrôle de liaison montante ; et l'unité de détermination de puissance (22) est spécialement conçue pour :

selon les formules (5) et (6), déterminer une quatrième puissance de transmission du PUSCH de la cellule dans la sous-trame actuelle et de l'autre cellule qui traite une agrégation de porteuses avec la cellule dans la sous-trame actuelle, dans lequel :

$$\sum_{c \neq j} w(i) \cdot P_{PUSCH,c}(i) \leq \left( P_{CMAX}(i) - P_{PUSCH,j}(i) - \max\left( P_{PUCCH}(i), \ P_{PUCCH}(t) \right) \right)$$

$$(5)$$

$$P_{PUSCH,j}(i) = \min\left\{ P_{PUSCH,j\_o}(i), \left( P_{CMAX}(i) - \max\left( P_{PUCCH}(i), \ P_{PUCCH}(t) \right) \right) \right\}$$

$$(6)$$

dans laquelle $w(i)$ représente un facteur de pondération, dont la plage de valeurs est [0, 1] ; $c$ représente une cellule ; $\sum_{c \neq j} w(i) \cdot P_{PUSCH,c}(i)$ représente une quatrième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUCCH}(i)$ représente une deuxième puissance de transmission, obtenue par l'équipement d'utilisateur en effectuant un contrôle de puissance de liaison montante, du PUCCH de l'autre cellule qui traite une agrégation de porteuses avec la cellule dans la sous-trame actuelle ; $P_{PUCCH}(t)$ représente une quatrième puissance de transmission, obtenue par l'équipement d'utilisateur en effectuant un contrôle de puissance de liaison montante, du PUCCH de l'autre cellule qui traite une agrégation de porteuses avec la cellule dans la sous-trame adjacente ; $P_{CMAX}(i)$ représente une puissance admissible maximale de la sous-trame actuelle; et $P_{PUSCH,j\_o}(i)$ représente une deuxième puissance de transmission, obtenue par l'équipement d'utilisateur en effectuant un contrôle de puissance de liaison montante, d'un PUSCH portant un signalement de liaison montante compris dans la trame actuelle ; ou selon la formule (7), déterminer une cinquième puissance de transmission du PUSCH de la cellule dans la sous-trame actuelle et de l'autre cellule qui traite une agrégation de porteuses avec la cellule dans la sous-trame actuelle, dans lequel :

$$\sum_{c \neq j} w(i) \cdot P_{PUSCH,c}(i) + u(i) \cdot P_{PUSCH,j}(i) \leq \left( P_{CMAX}(i) - \max\left( P_{PUCCH}(i), \ P_{PUCCH}(t) \right) \right)$$

$$(7)$$

dans laquelle $w(i)$ et $u(i)$ représentent des facteurs de pondération, dont la plage de valeurs est [0, 1] ; $c$ représente une cellule ; $\sum_{c \neq j} w(i) \cdot P_{PUSCH,c}(i)$ représente une cinquième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUCCH}(i)$ représente une troisième puissance de transmission, obtenue par l'équipement d'utilisateur en effectuant un contrôle de puissance de liaison montante, du PUCCH de l'autre cellule qui traite une agrégation de porteuses avec la cellule dans la sous-trame actuelle ; $P_{PUCCH}(t)$ représente une cinquième puissance de transmission, obtenue par l'équipement d'utilisateur en effectuant un contrôle de puissance de liaison montante, du PUCCH de l'autre cellule qui traite une agrégation de porteuses avec la cellule dans la sous-trame adjacente ; $P_{CMAX}(i)$ représente une puissance admissible maximale de la sous-trame actuelle; et $P_{PUSCH,j}(i)$ représente une deuxième puissance de transmission, obtenue par l'équipement d'utilisateur en effectuant un contrôle de puissance de liaison montante, d'un PUSCH portant un signalement de contrôle de liaison montante dans la sous-trame actuelle.

**15.** Équipement d'utilisateur selon la revendication 10, dans lequel le chevauchement déterminé par l'unité de détermination de chevauchement (21) consiste en ce que : le PUSCH de la cellule dans la sous-trame actuelle, ou un PUCCH de la cellule dans la sous-trame actuelle, ou un PUSCH et/ou le PUCCH de la cellule dans la sous-trame actuelle est/sont chevauché(s) par un PUSCH portant un signalement de liaison montante dans l'autre cellule dans la sous-trame adjacente, l'autre cellule étant en agrégation de porteuses avec la cellule.

**16.** Équipement d'utilisateur selon la revendication 15, dans lequel l'unité de détermination de puissance (22) est spécifiquement conçue pour :

selon la formule (8), déterminer une sixième puissance de transmission du PUSCH de la cellule dans la sous-trame actuelle et de l'autre cellule qui traite une agrégation de porteuses avec la cellule dans la sous-trame actuelle, dans lequel :

$$\sum_c w(i) \cdot P_{PUSCH,c}(i) \leq \left( P_{CMAX}(i) - P_{PUSCH,k}(t) - P_{PUCCH}(i) \right) \tag{8}$$

dans laquelle $w(i)$ représente un facteur de pondération, dont la plage de valeurs est [0, 1] ; $c$ représente une cellule ; $\sum_c w(i) \cdot P_{PUSCH,c}(i)$ représente la sixième puissance de transmission du PUSCH de la cellule dans la sous-trame actuelle et de l'autre cellule qui traite une agrégation de porteuses avec la cellule dans la sous-trame actuelle ; $P_{PUCCH}(i)$ représente une quatrième puissance de transmission, obtenue par l'équipement d'utilisateur en effectuant un contrôle de puissance de liaison montante, d'un PUCCH de la cellule ou de l'autre cellule qui traite une agrégation de porteuses avec la cellule dans la sous-trame actuelle ; $P_{CMAX}(i)$ représente une puissance admissible maximale de la sous-trame actuelle ; et $P_{PUSCH,k}(t)$ représente une première puissance de transmission, obtenue par l'équipement d'utilisateur en effectuant un contrôle de puissance de liaison montante, d'un PUSCH portant un signalement de contrôle de liaison montante de la cellule dans la sous-trame adjacente et de l'autre cellule qui traite une agrégation de porteuses avec la cellule dans la sous-trame adjacente ;
ou
selon la formule (9), déterminer une septième puissance de transmission du PUSCH de la cellule dans la sous-trame actuelle et de l'autre cellule qui traite une agrégation de porteuses avec la cellule dans la sous-trame actuelle, dans lequel :

$$\sum_c w(i) \cdot P_{PUSCH,c}(i) + u(i) \cdot P_{PUSCH,k}(t) + v(i) \cdot P_{PUCCH}(i) \leq P_{CMAX}(i) \tag{9}$$

 dans laquelle $w(i)$, $u(i)$ et $v(i)$ représentent des facteurs de pondération, dont la plage de valeurs est [0, 1] ; c représente une cellule ; $\sum_c w(i) \cdot P_{PUSCH,c}(i)$ représente la septième puissance de transmission du PUSCH de la cellule dans la sous-trame actuelle et de l'autre cellule qui traite une agrégation de porteuses avec la cellule dans la sous-trame actuelle ; $P_{PUCCH}(i)$ représente une cinquième puissance de transmission, obtenue par l'équipement d'utilisateur en effectuant un contrôle de puissance de liaison montante, d'un PUCCH de la cellule ou de l'autre cellule qui traite une agrégation de porteuses avec la cellule dans la sous-trame actuelle ; $P_{CMAX}(i)$ représente une puissance admissible maximale de la sous-trame actuelle ; et $P_{PUSCH,k}(t)$ représente une deuxième puissance de transmission, obtenue par l'équipement d'utilisateur en effectuant un contrôle de puissance de liaison montante, d'un PUSCH portant un signalement de liaison montante de la cellule dans la sous-trame adjacente et de l'autre cellule qui traite une agrégation de porteuses avec la cellule dans la sous-trame adjacente.

**17.** Équipement d'utilisateur selon la revendication 15, dans lequel le PUSCH de la cellule dans la sous-trame actuelle et de l'autre cellule qui traite une agrégation de porteuses avec la cellule dans la sous-trame actuelle consiste en un PUSCH portant un signalement de contrôle de liaison montante ; et l'unité de détermination de puissance (22) est spécialement conçue pour :

selon les formules (10) et (11) ou selon les formules (10) et (12), déterminer une huitième puissance de transmission du PUSCH de la cellule dans la sous-trame actuelle et de l'autre cellule qui traite une agrégation de porteuses avec la cellule dans la sous-trame actuelle, dans lequel:

$$\sum_{c \neq j} w(i) \cdot P_{PUSCH,c}(i) \leq \left( P_{CMAX}(i) - P_{PUSCH,j}(i) - P_{PUSCH,k}(t) \right) \tag{10}$$

$$P_{PUSCH,j}(i) = \min \left\{ P_{PUSCH,j\_o}(i), \left( P_{CMAX}(i) - P_{PUSCH,k\_o}(i\text{-}1) \right) \right\} \tag{11}$$

$$P_{PUSCH,j}(i) = \min \left\{ P_{PUSCH,j\_o}(i), \left( P_{CMAX}(i) - P_{PUSCH,k\_o}(i+1) \right) \right\} \tag{12}$$

dans laquelle $w(i)$ représente un facteur de pondération, dont la plage de valeurs est [0, 1] ; $c$ représente une cellule; $\sum_{c \neq j} w(i) \cdot P_{PUSCH,c}(i)$ représente une huitième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{CMAX}(i)$ représente une puissance admissible maximale de la sous-trame actuelle ; $P_{PUSCH,k}(t)$ représente une troisième puissance de transmission, obtenue par l'équipement d'utilisateur en effectuant un contrôle de puissance de liaison montante, d'un PUSCH portant un signalement de liaison montante de la cellule dans la sous-trame adjacente et de l'autre cellule qui traite une agrégation de porteuses avec la cellule dans la sous-trame adjacente ; $P_{PUSCH,j\_o}(i)$ représente une troisième puissance de transmission, obtenue par l'équipement d'utilisateur en effectuant un contrôle de puissance de liaison montante, d'un PUSCH portant un signalement de liaison montante compris dans la trame actuelle ; $P_{PUSCH,k\_o}(i\text{-}1)$ représente une première puissance de transmission d'un PUSCH portant un signalement de liaison montante de l'autre cellule qui traite une agrégation de porteuses avec la cellule dans une sous-trame adjacente avant la sous-trame actuelle ; et $P_{PUSCH,k\_o}(i+1)$ représente une première puissance de transmission d'un PUSCH portant un signalement de liaison montante de l'autre cellule qui traite une agrégation de porteuses avec la cellule dans une sous-trame adjacente après la sous-trame actuelle ; ou

selon la formule (13), déterminer une neuvième puissance de transmission du PUSCH de la cellule dans la sous-trame actuelle et de l'autre cellule qui traite une agrégation de porteuses avec la cellule dans la sous-trame actuelle, dans lequel :

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i) \tag{13}$$

dans laquelle $w(i)$, $u(i)$ et $v(i)$ représentent des facteurs de pondération, dont la plage de valeurs est [0, 1] ; $c$ représente une cellule ; $\sum_{c \neq j} w(i) \cdot P_{PUSCH,c}(i)$ représente une neuvième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{CMAX}(i)$ représente une puissance admissible maximale de la sous-trame actuelle ; $P_{PUSCH,k}(t)$ représente la quatrième puissance de transmission, obtenue par l'équipement d'utilisateur en effectuant un contrôle de puissance de liaison montante, d'un PUSCH portant un signalement de liaison montante de la cellule dans la sous-trame adjacente et de l'autre cellule qui traite une agrégation de porteuses avec la cellule dans la sous-trame adjacente ; $P_{PUSCH,j}(i)$ représente une troisième puissance de transmission, obtenue par l'équipement d'utilisateur en effectuant un contrôle de puissance de liaison montante, d'un PUSCH portant un signalement de contrôle de liaison montante dans la sous-trame actuelle.

18. Équipement d'utilisateur selon la revendication 15, dans lequel : le PUSCH de la cellule dans la sous-trame actuelle et de l'autre cellule qui traite une agrégation de porteuses avec la cellule dans la sous-trame actuelle consiste en un PUSCH portant un signalement de liaison montante ; et l'unité de détermination de puissance (22) est spécialement conçue pour :

selon les formules (14) et (15) ou selon les formules (14) et (16), déterminer une dixième puissance de transmission du PUSCH de la cellule dans la sous-trame actuelle et de l'autre cellule qui traite une agrégation de porteuses avec la cellule dans la sous-trame actuelle, dans lequel :

$$\sum_{c \neq j} w(i) \cdot P_{PUSCH,c}(i) \leq \left( P_{CMAX}(i) - P_{PUSCH,j}(i) - P_{PUSCH,k}(t) - P_{PUCCH}(i) \right) \tag{14}$$

$$P_{PUSCH,j}(i) = \min \left\{ P_{PUSCH,j\_o}(i), \left( P_{CMAX}(i) - P_{PUCCH}(i) - P_{PUSCH,k\_o}(i-1) \right) \right\} \tag{15}$$

$$P_{PUSCH,j}(i) = \min \left\{ P_{PUSCH,j\_o}(i), \left( P_{CMAX}(i) - P_{PUCCH}(i) - P_{PUSCH,k\_o}(i+1) \right) \right\} \tag{16}$$

dans laquelle $w(i)$ représente un facteur de pondération, dont la plage de valeurs est [0, 1] ; $c$ représente une cellule ; $\sum_{c \neq j} w(i) \cdot P_{PUSCH,c}(i)$ représente la dixième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUSCH}(i)$ représente une sixième puissance de transmission, obtenue par l'équipement d'utilisateur en effectuant un contrôle de puissance de liaison montante, du PUCCH de la cellule ou de l'autre cellule qui traite une agrégation de porteuses avec la cellule dans la sous-trame actuelle ; $P_{CMAX}(i)$ représente une puissance admissible maximale de la sous-trame actuelle ; $P_{PUSCH,k}(t)$ représente une cinquième puissance de transmission, obtenue par l'équipement d'utilisateur en effectuant un contrôle de puissance de liaison montante, d'un PUSCH portant un signalement de liaison montante de la cellule dans la sous-trame adjacente et de l'autre cellule qui traite une agrégation de porteuses avec la cellule dans la sous-trame adjacente ; $P_{PUSCH,j\_o}(i)$ représente une quatrième puissance de transmission, obtenue par l'équipement d'utilisateur en effectuant un contrôle de puissance de liaison montante, du PUSCH portant un signalement de liaison montante compris dans la trame actuelle ; $P_{PUSCH,k\_o}(i-1)$ représente une deuxième puissance de transmission d'un PUSCH portant un signalement de liaison montante de l'autre cellule qui traite une agrégation de porteuses avec la cellule dans une sous-trame adjacente avant la sous-trame actuelle ; $P_{PUSCH,k\_o}(i+1)$ représente une deuxième puissance de transmission d'un PUSCH portant un signalement de liaison montante de l'autre cellule qui traite une agrégation de porteuses avec la cellule dans une sous-trame adjacente après la sous-trame actuelle ; ou
selon la formule (17), déterminer une onzième puissance de transmission du PUSCH de la cellule dans la sous-trame actuelle et de l'autre cellule qui traite une agrégation de porteuses avec la cellule dans la sous-trame actuelle, dans lequel :

$$\sum_{c \neq j} w(i) \cdot P_{PUSCH,c}(i) + u(i) \cdot P_{PUSCH,j}(i) + v(i) \cdot P_{PUSCH,k}(t) \leq P_{CMAX}(i) - P_{PUCCH}(i) \tag{17}$$

dans laquelle $w(i)$, $u(i)$ et $v(i)$ représentent des facteurs de pondération, dont la plage de valeurs est [0, 1] ; $c$ représente une cellule ; $\sum_{c \neq j} w(i) \cdot P_{PUSCH,c}(i)$ représente une onzième puissance de transmission d'un PUSCH ne portant pas de signalement de contrôle de liaison montante de la cellule dans la sous-trame actuelle et de l'autre cellule qui traite une agrégation de porteuses avec la cellule dans la sous-trame actuelle ; $P_{PUSCH,j}(i)$ représente une septième puissance de transmission, obtenue par l'équipement d'utilisateur en effectuant un contrôle de puissance de liaison montante, du PUCCH de la cellule ou de l'autre cellule qui traite une agrégation de porteuses avec la cellule dans la sous-trame actuelle ; $P_{CMAX}(i)$ représente une puissance admissible maximale de la sous-trame actuelle ; $P_{PUSCH,j}(i)$ représente une quatrième puissance de transmission, obtenue par l'équipement d'utilisateur en effectuant un contrôle de puissance de liaison montante, du PUSCH portant un signalement de contrôle de liaison montante dans la sous-trame actuelle ; $P_{PUSCH,k}(t)$ représente une sixième puissance de transmission, obtenue par l'équipement d'utilisateur en effectuant un contrôle de puissance de liaison montante, d'un PUSCH portant un signalement de liaison montante de la cellule dans la sous-trame adjacente et de l'autre cellule qui traite une agrégation de porteuses avec la cellule dans la sous-trame adjacente.

A user equipment determines an overlap between an uplink channel of a cell in a current subframe and an uplink channel of another cell in an adjacent subframe, the cell being carrier aggregation with the another cell

101

The user equipment determines, according to the determined overlap, transmission power of a PUSCH of the cell in the current subframe and the another cell in the current subframe, the another cell being carrier aggregation with the cell

102

FIG. 1

Overlap determining unit  21

Power determining unit  22

FIG. 2

**EP 2 804 430 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110081936 A1